(19) Europäisches Patentamt
European Patent Office
Office européen des brevets

(11) EP 2 886 687 A1

(12) EUROPEAN PATENT APPLICATION
published in accordance with Art. 153(4) EPC

(43) Date of publication:
**24.06.2015 Bulletin 2015/26**

(21) Application number: **13879575.2**

(22) Date of filing: **12.08.2013**

(51) Int Cl.:
***D01F 6/82*** *(2006.01)* ***C08G 69/40*** *(2006.01)*
***D01F 6/60*** *(2006.01)* ***D03D 15/00*** *(2006.01)*

(86) International application number:
**PCT/JP2013/071836**

(87) International publication number:
**WO 2014/027648 (20.02.2014 Gazette 2014/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.08.2012 JP 2012179759**
**14.08.2012 JP 2012179758**

(71) Applicant: **Mitsubishi Gas Chemical Company, Inc.**
**Tokyo 100-8324 (JP)**

(72) Inventors:
- **MITADERA, Jun**
**Hiratsuka-shi**
**Kanagawa 254-0016 (JP)**
- **TAKEO, Mayumi**
**Hiratsuka-shi**
**Kanagawa 254-0016 (JP)**
- **SATOU, Kazuya**
**Hiratsuka-shi**
**Kanagawa 254-0016 (JP)**
- **TUNAKA, Nobuhide**
**Hiratsuka-shi**
**Kanagawa 254-0016 (JP)**
- **KATOU, Tomonori**
**Hiratsuka-shi**
**Kanagawa 254-0016 (JP)**

(74) Representative: **Vossius & Partner**
**Patentanwälte Rechtsanwälte mbB**
**Siebertstrasse 3**
**81675 München (DE)**

# (54) POLYETHER POLYAMIDE FIBER

(57) Provided is a polyether polyamide fiber including a polyether polyamide in which a diamine constituent unit thereof is derived from a specified polyether diamine compound and a xylylenediamine, and a dicarboxylic acid constituent unit thereof is derived from an α,ω-linear aliphatic dicarboxylic acid having from 4 to 20 carbon atoms.

EP 2 886 687 A1

## Description

### TECHNICAL FIELD

The present invention relates to a polyether polyamide fiber, and in detail, the invention relates to a polyether polyamide fiber having high strength and high elastic modulus and also having excellent flexibility.

### BACKGROUND ART

Polyamide-based fibers are used as sporting goods and industrial materials, such as a string for racket, a rubber reinforcing material, a tire code, a filtering material for filter paper, etc., and the like. In these applications, the polyamide-based fibers that are a material are required to have excellent mechanical strength such as high strength, high elastic modulus, etc.

As a polyamide-based fiber having high strength and high elastic modulus, Patent Document 1 discloses a stretched polyamide fiber obtained from a resin containing a polyamide resin obtained by polycondensation of a diamine containing 70% by mole or more of a mixture of cis-1,3-bis(aminomethyl)cyclohexane and trans-1,3-bis(aminomethyl)cyclohexane in a diamine component thereof with a dicarboxylic acid containing 70% by mole or more of an $\alpha,\omega$-linear aliphatic dicarboxylic acid having from 4 to 20 carbon atoms in a dicarboxylic acid component thereof. Patent Document 2 discloses a stretched polyamide fiber containing a polyamide obtained by polymerization of monomers containing 70% by mole or more of each of m-xylylenediamine as a diamine component thereof and adipic acid as a dicarboxylic acid component thereof.

In addition, Patent Document 3 discloses a highly shrinking fiber composed of a nylon MXD6 polymer (crystalline polyamide obtained by a polymerization reaction of m-xylylenediamine and adipic acid) and a nylon 6 polymer in a prescribed weight ratio, whose breaking strength is a certain value or more.

### CITATION LIST

### PATENT LITERATURE

Patent Document 1: JP-A-11-315419
Patent Document 2: JP-A-9-241924
Patent Document 3: JP-A-2011-26762

### SUMMARY OF INVENTION

### TECHNICAL PROBLEM

However, since the polyamide-based fibers described in Patent Documents 1 to 3 are not sufficient in flexibility, in the case where these fibers are processed into a woven fabric or the like, there is a concern that a stiff feeling is brought. Then, it was desired to further enhance the flexibility of polyamide-based fibers.

A technical problem to be solved by the present invention is to provide a polyether polyamide fiber having high strength and high elastic modulus and also having excellent flexibility.

### SOLUTION TO PROBLEM

The present invention provides the following polyether polyamide fiber and a product comprising the subject fiber.

<1> A polyether polyamide fiber comprising a polyether polyamide (A1) in which a diamine constituent unit thereof is derived from a polyether diamine compound (a1-1) represented by the following general formula (1) and a xylylenediamine (a-2), and a dicarboxylic acid constituent unit thereof is derived from an $\alpha,\omega$-linear aliphatic dicarboxylic acid having from 4 to 20 carbon atoms:

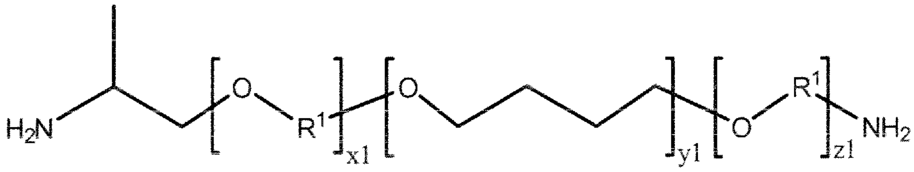 (1)

wherein (x1 + z1) is from 1 to 30; y1 is from 1 to 50; and $R^1$ represents a propylene group.

<2> A knitted fabric, a woven fabric, a nonwoven fabric, or a staple comprising the polyether polyamide fiber as set forth above in <1>.

<3> A polyether polyamide fiber comprising a polyether polyamide (A2) in which a diamine constituent unit thereof is derived from a polyether diamine compound (a2-1) represented by the following general formula (2) and a xylylenediamine (a-2), and a dicarboxylic acid constituent unit thereof is derived from an α,ω-linear aliphatic dicarboxylic acid having from 4 to 20 carbon atoms:

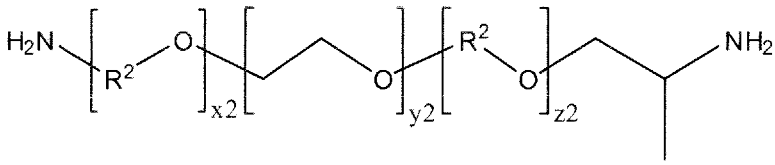 (2)

wherein (x2 + z2) is from 1 to 60; y2 is from 1 to 50; and $R^2$ represents a propylene group.

<4> A knitted fabric, a woven fabric, a nonwoven fabric, or a staple comprising the polyether polyamide fiber as set forth above in <3>.

ADVANTAGEOUS EFFECTS OF INVENTION

The polyether polyamide fiber of the present invention has high strength and high elastic modulus and also has excellent flexibility. As described previously, since the polyether polyamide fiber of the present invention has a good balance between the strength and the flexibility, it can be used in extremely wide fields including intermediate garments such as an inner garment, an undergarment, a lining, etc., outer garments such as a shirt, a blouse, a sportswear, slacks, etc., bedclothes such as a bed sheet, a quilt cover, etc., and the like.

DESCRIPTION OF EMBODIMENTS

[Polyether polyamide fiber]

As a first invention, the polyether polyamide fiber of the present invention comprises a polyether polyamide (A1) in which a diamine constituent unit thereof is derived from a polyether diamine compound (a1-1) represented by the following general formula (1) and a xylylenediamine (a-2), and a dicarboxylic acid constituent unit thereof is derived from an α,ω-linear aliphatic dicarboxylic acid having from 4 to 20 carbon atoms:

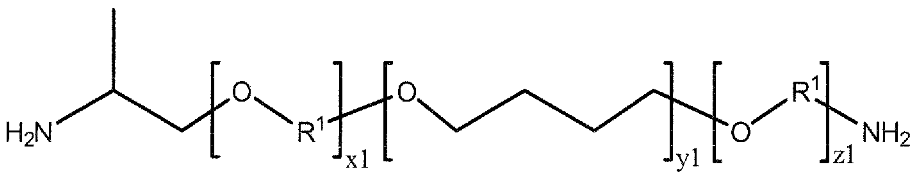 (1)

wherein (x1 + z1) is from 1 to 30; y1 is from 1 to 50; and $R^1$ represents a propylene group.

In addition, as a second invention, the polyether polyamide fiber of the present invention comprises a polyether polyamide (A2) in which a diamine constituent unit thereof is derived from a polyether diamine compound (a2-1) represented by the following general formula (2) and a xylylenediamine (a-2), and a dicarboxylic acid constituent unit thereof is derived from an α,ω-linear aliphatic dicarboxylic acid having from 4 to 20 carbon atoms:

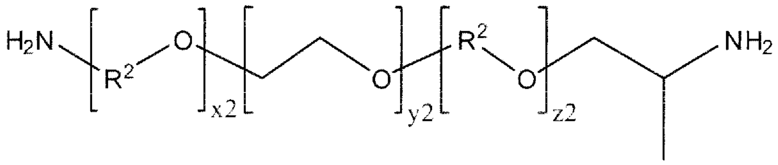

(2)

wherein (x2 + z2) is from 1 to 60; y2 is from 1 to 50; and $R^2$ represents a propylene group.

<Polyether polyamides (A1) and (A2)>

The polyether polyamide (A1) is one in which a diamine constituent unit thereof is derived from a polyether diamine compound (a1-1) represented by the foregoing general formula (1) and a xylylenediamine (a-2), and a dicarboxylic acid constituent unit thereof is derived from an $\alpha,\omega$-linear aliphatic dicarboxylic acid having from 4 to 20 carbon atoms. In addition, the polyether polyamide (A2) is one in which a diamine constituent unit thereof is derived from a polyether diamine compound (a2-1) represented by the foregoing general formula (2) and a xylylenediamine (a-2), and a dicarboxylic acid constituent unit thereof is derived from an $\alpha,\omega$-linear aliphatic dicarboxylic acid having from 4 to 20 carbon atoms. By using the polyether polyamide (A1) or (A2), it is possible to produce a polyether polyamide fiber having excellent mechanical properties such as flexibility, tensile elongation at break, etc.

(Diamine constituent unit)

The diamine constituent unit that constitutes the polyether polyamide (A1) is derived from a polyether diamine compound (a1-1) represented by the foregoing general formula (1) and a xylylenediamine (a-2). In addition, the diamine constituent unit that constitutes the polyether polyamide (A2) is derived from a polyether diamine compound (a2-1) represented by the foregoing general formula (2) and a xylylenediamine (a-2).

[Polyether diamine compound (a1-1)]

The diamine constituent unit that constitutes the polyether polyamide (A1) contains a constituent unit derived from a polyether diamine compound (a1-1) represented by the foregoing general formula (1). In the foregoing general formula (1), (x1 + z1) is from 1 to 30, preferably from 2 to 25, more preferably from 2 to 20, and still more preferably from 2 to 15. In addition, y1 is from 1 to 50, preferably from 1 to 40, more preferably from 1 to 30, and still more preferably from 1 to 20. In the case where the values of x1, y1, and z1 are larger than the foregoing ranges, the compatibility with an oligomer or polymer composed of a xylylenediamine and a dicarboxylic acid, which is formed on the way of a reaction of melt polymerization, becomes low, so that the polymerization reaction proceeds hardly.

In addition, in the foregoing general formula (1), all of $R^1$s represent a propylene group. A structure of the oxypropylene group represented by $-OR^1-$ may be any of $-OCH_2CH_2CH_2-$, $-OCH(CH_3)CH_2-$, and $-OCH_2CH(CH_3)-$.

A number average molecular weight of the polyether diamine compound (a1-1) is preferably from 204 to 5,000, more preferably from 250 to 4,000, still more preferably from 300 to 3,000, yet still more preferably from 400 to 2,000, and even yet still more preferably from 500 to 1,800. So long as the number average molecular weight of the polyether diamine compound falls within the foregoing range, a polymer that reveals flexibility can be obtained.

[Polyether diamine compound (a2-1)]

The diamine constituent unit that constitutes the polyether polyamide (A2) contains a constituent unit derived from a polyether diamine compound (a2-1) represented by the foregoing general formula (2). In the foregoing general formula (2), (x2 + z2) is from 1 to 60, preferably from 2 to 40, more preferably from 2 to 30. and still more preferably from 2 to 20. In addition, y2 is from 1 to 50, preferably from 1 to 40, more preferably from 1 to 30, and still more preferably from 1 to 20. In the case where the values of x2, y2, and z2 are larger than the foregoing ranges, the compatibility with an oligomer or polymer composed of a xylylenediamine and a dicarboxylic acid, which is formed on the way of a reaction of melt polymerization, becomes low, so that the polymerization reaction proceeds hardly.

In addition, in the foregoing general formula (2), all of $R^2$s represent a propylene group. A structure of the oxypropylene group represented by $-OR^2-$ may be any of $-OCH_2CH_2CH_2-$, $-OCH(CH_3)CH_2-$, and $-OCH_2CH(CH_3)-$.

A number average molecular weight of the polyether diamine compound (a2-1) is preferably from 180 to 5,700, more preferably from 200 to 4,000, still more preferably from 300 to 3,000, yet still more preferably from 400 to 2,000, and even yet still more preferably 500 to 1,800. So long as the number average molecular weight of the polyether diamine compound falls within the foregoing range, a polymer that reveals flexibility and moisture absorbing and releasing

properties of water can be obtained.

[Xylylenediamine (a-2)]

The diamine constituent unit that constitutes the polyether polyamide (A1) or (A2) contains a constituent unit derived from a xylylenediamine (a-2). The xylylenediamine (a-2) is preferably m-xylylenediamine, p-xylylenediamine, or a mixture thereof, and more preferably m-xylylenediamine or a mixture of m-xylylenediamine and p-xylylenediamine.

In the case where the xylylenediamine (a-2) is derived from m-xylylenediamine, the resulting polyether polyamide is excellent in terms of flexibility, crystallinity, melt moldability, molding processability, and toughness.

In the case where the xylylenediamine (a-2) is derived from a mixture of m-xylylenediamine and p-xylylenediamine, the resulting polyether polyamide is excellent in terms of flexibility, crystallinity, melt moldability, molding processability, and toughness and furthermore, exhibits high heat resistance and high elastic modulus.

In the case where a mixture of m-xylylenediamine and p-xylylenediamine is used as the xylylenediamine (a-2), a proportion of the p-xylylenediamine relative to a total amount of m-xylylenediamine and p-xylylenediamine is preferably 90% by mole or less, more preferably from 1 to 80% by mole, and still more preferably from 5 to 70% by mole. So long as the proportion of p-xylylenediamine falls within the foregoing range, a melting point of the resulting polyether polyamide is not close to a decomposition temperature of the polyether polyamide, and hence, such is preferable.

A proportion of the constituent unit derived from the xylylenediamine (a-2) in the diamine constituent unit, namely a proportion of the xylylenediamine (a-2) relative to a total amount of the polyether diamine compound (a1-1) or (a2-1) and the xylylenediamine (a-2), both of which constitute the diamine constituent unit, is preferably from 50 to 99.8% by mole, more preferably from 50 to 99.5% by mole, and still more preferably from 50 to 99% by mole. So long as the proportion of the constituent unit derived from the xylylenediamine (a-2) in the diamine constituent unit falls within the foregoing range, the resulting polyether polyamide is excellent in terms of melt moldability and furthermore, is excellent in terms of mechanical physical properties such as strength, elastic modulus, etc.

As described previously, though the diamine constituent unit that constitutes the polyether polyamide (A1) or (A2) is derived from the polyether diamine compound (a1-1) represented by the foregoing general formula (1) and the xylylenediamine (a-2), or the polyether diamine compound (a2-1) represented by the foregoing general formula (2) and the xylylenediamine (a-2), so long as the effects of the present invention are not hindered, a constituent unit derived from other diamine compound may be contained.

As the diamine compound which may constitute a diamine constituent unit other than the polyether diamine compound (a1-1) and the xylylenediamine (a-2), and the polyether diamine compound (a2-1) and the xylylenediamine (a-2), though there can be exemplified aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2.4-trimethylhexamethylenediamine, 2,4,4-trimethylhexamethylenediamine, etc.; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, bis(aminomethyl)tricyclodecane, etc.; diamines having an aromatic ring, such as bis(4-aminophenyl) ether, p-phenylenediamine, bis(aminomethyl)naphthalene, etc.; and the like, the diamine compound is not limited to these compounds.

(Dicarboxylic acid constituent unit)

The dicarboxylic acid constituent unit that constitutes the polyether polyamide (A1) or (A2) is derived from an $\alpha,\omega$-linear aliphatic dicarboxylic acid having from 4 to 20 carbon atoms. As the $\alpha,\omega$-linear aliphatic dicarboxylic acid having from 4 to 20 carbon atoms, though there can be exemplified succinic acid, glutaric acid, adipic acid, pimelic acid, suberic acid, azelaic acid, sebacic acid, 1,10-decanedicarboxylic acid, 1,11-undecanedicarboxylic acid, 1,12-dodecanedicarboxylic acid, and the like, at least one member selected from adipic acid and sebacic acid is preferably used from the viewpoints of crystallinity and high elasticity. These dicarboxylic acids may be used solely or in combination of two or more kinds thereof.

As described previously, though the dicarboxylic acid constituent unit that constitutes the polyether polyamide (A1) or (A2) is derived from the $\alpha,\omega$-linear aliphatic dicarboxylic acid having from 4 to 20 carbon atoms, so long as the effects of the present invention are not hindered, a constituent unit derived from other dicarboxylic acid may be contained.

As the dicarboxylic acid which may constitute the dicarboxylic acid constituent unit other than the $\alpha,\omega$-linear aliphatic dicarboxylic acid having from 4 to 20 carbon atoms, though there can be exemplified aliphatic dicarboxylic acids such as oxalic acid, malonic acid, etc.; aromatic dicarboxylic acids such as terephthalic acid, isophthalic acid, 2,6-naphthalenedicarboxylic acid, etc.; and the like, the dicarboxylic acid is not limited to these compounds.

In the case where a mixture of an $\alpha,\omega$-linear aliphatic dicarboxylic acid having from 4 to 20 carbon atoms and isophthalic acid is used as the dicarboxylic acid component, the heat resistance and molding processability of the

polyether polyamide (A1) or (A2) can be enhanced. A molar ratio of the α,ω-linear aliphatic dicarboxylic acid having from 4 to 20 carbon atoms and isophthalic acid (α,ω-linear aliphatic dicarboxylic acid having from 4 to 20 carbon atoms)/(isophthalic acid)) is preferably from 50/50 to 99/1, and more preferably from 70/30 to 95/5.

(Physical properties of polyether polyamides (A1) and (A2))

When the polyether polyamide (A1) or (A2) contains, as a hard segment, a highly crystalline polyamide block formed of the xylylenediamine (a-2) and the α,ω-linear aliphatic dicarboxylic acid having from 4 to 20 carbon atoms and, as a soft segment, a polyether block derived from the polyether diamine compound (a1-1) or (a2-1), it is excellent in terms of melt moldability and molding processability. Furthermore, the resulting polyether polyamide is excellent in terms of toughness, flexibility, crystallinity, heat resistance, and the like.

A relative viscosity of the polyether polyamide (A1) or (A2) is preferably in the range of from 1.1 to 3.0, more preferably in the range of from 1.1 to 2.9, and still more preferably in the range of from 1.1 to 2.8 from the viewpoints of moldability and melt mixing properties with other resins. The relative viscosity is measured by a method described in the Examples.

A melting point of the polyether polyamide (A1) is preferably in the range of from 170 to 270°C, more preferably in the range of from 175 to 270°C, and still more preferably in the range of from 180 to 270°C from the viewpoint of heat resistance. In addition, a melting point of the polyether polyamide (A2) is preferably in the range of from 170 to 270°C, more preferably in the range of from 175 to 270°C, still more preferably in the range of from 180 to 270°C, and yet still more preferably in the range of 180 to 260°C from the viewpoint of heat resistance. The melting point is measured by a method described in the Examples.

A rate of tensile elongation at break of the polyether polyamide (A1) (measurement temperature: 23°C, humidity: 50% RH) is preferably 50% or more, more preferably 100% or more, still more preferably 200% or more, yet still more preferably 250% or more, and even yet still more preferably 300% or more from the viewpoint of flexibility. In addition, a rate of tensile elongation at break of the polyether polyamide (A2) (measurement temperature: 23°C, humidity: 50% RH) is preferably 100% or more, more preferably 200% or more, still more preferably 250% or more, and yet still more preferably 300% or more from the viewpoint of flexibility. The rate of tensile elongation at break is measured by a method described in the Examples.

A tensile modulus of the polyether polyamide (A1) (measurement temperature: 23°C, humidity: 50% RH) is preferably 200 MPa or more, more preferably 300 MPa or more, still more preferably 400 MPa or more, yet still more preferably 500 MPa or more, and even yet still more preferably 1,000 MPa or more from the viewpoints of flexibility and mechanical strength. In addition, a tensile modulus of the polyether polyamide (A2) (measurement temperature: 23°C, humidity: 50% RH) is preferably 100 MPa or more, more preferably 200 MPa or more, still more preferably 300 MPa or more, yet still more preferably 400 MPa or more, and even yet still more preferably 500 MPa or more from the viewpoints of flexibility and mechanical strength. The tensile modulus is measured by a method described in the Examples.

(Production of polyether polyamide (A1) and (A2))

The production of the polyether polyamide (A1) or (A2) is not particularly limited but can be performed by an arbitrary method under an arbitrary polymerization condition.

The polyether polyamide (A1) or (A2) can be, for example, produced by a method in which a salt composed of the diamine component (the diamine including the polyether diamine compound (a1-1) and the xylylenediamine (a-2), and the like, or the diamine including the polyether diamine compound (a2-1) and the xylylenediamine (a-2), and the like) and the dicarboxylic acid component (the dicarboxylic acid including the α,ω-linear aliphatic dicarboxylic acid having from 4 to 20 carbon atoms and the like) is subjected to temperature rise in a pressurized state in the presence of water, and polymerization is performed in a molten state while removing the added water and condensed water.

In addition, the polyether polyamide (A1) or (A2) can also be produced by a method in which the diamine component (the diamine including the polyether diamine compound (a1-1) and the xylylenediamine (a-2), and the like, or the diamine including the polyether diamine compound (a2-1) and the xylylenediamine (a-2), and the like) is added directly to the dicarboxylic acid component (the dicarboxylic acid including the α,ω-linear aliphatic dicarboxylic acid having from 4 to 20 carbon atoms and the like) in a molten state, and polycondensation is performed under atmospheric pressure. In that case, in order to keep the reaction system in a uniform liquid state, the diamine component is continuously added to the dicarboxylic acid component, and during that period, the polycondensation is advanced while subjecting the reaction system to temperature rise such that the reaction temperature does not fall below the melting point of the formed oligoamide or polyamide.

A molar ratio of the diamine component (the diamine including the polyether diamine compound (a1-1) and the xylylenediamine (a-2), and the like, or the diamine including the polyether diamine compound (a2-1) and the xylylenediamine (a-2), and the like) and the dicarboxylic acid component (the dicarboxylic acid including the α,ω-linear aliphatic

dicarboxylic acid having from 4 to 20 carbon atoms and the like) ((diamine component)/(dicarboxylic acid component)) is preferably in the range of from 0.9 to 1.1, more preferably in the range of from 0.93 to 1.07, still more preferably in the range of from 0.95 to 1.05, and yet still more preferably in the range of from 0.97 to 1.02. When the molar ratio falls within the foregoing range, an increase of the molecular weight is easily advanced.

A polymerization temperature is preferably from 150 to 300°C, more preferably from 160 to 280°C, and still more preferably from 170 to 270°C. So long as the polymerization temperature falls within the foregoing range, the polymerization reaction is rapidly advanced. In addition, since the monomers or the oligomer or polymer, etc. on the way of the polymerization hardly causes thermal decomposition, properties of the resulting polyether polyamide become favorable.

A polymerization time is generally from 1 to 5 hours after starting to add dropwise the diamine component. When the polymerization time is allowed to fall within the foregoing range, the molecular weight of the polyether polyamide (A1) or (A2) can be sufficiently increased, and furthermore, coloration of the resulting polyether polyamide can be suppressed.

In addition, the polyether polyamide (A1) or (A2) may also be produced by previously charging the polyether diamine compound (a1-1) or (a2-1) as the diamine component in a reaction tank together with the dicarboxylic acid component and heating them to form a molten mixture [Step (1)]; and adding to the resulting molten mixture the diamine component other than the above-described polyether diamine compound (a1-1) or (a2-1), including the xylylenediamine (a-2) and the like [Step (2)].

By previously charging the polyether diamine compound (a1-1) or (a2-1) in a reaction tank, the heat deterioration of the polyether diamine compound (a1-1) or (a2-1) can be suppressed. In that case, in order to keep the reaction system in a uniform liquid state, the diamine component other than the polyether diamine compound (a1-1) or (a2-1) is continuously added to the molten mixture, and during that period, the polycondensation is advanced while subjecting the reaction system to temperature rise such that the reaction temperature does not fall below the melting point of the formed oligoamide or polyamide.

Here, while the above-described [Step (1)] and [Step (2)] are described, in the description, each of the polyether polyamides (A1) and (A2) may be sometimes referred to as "polyether polyamide (A)", and each of the polyether diamine compounds (a1-1) and (a2-1) may be sometimes referred to as "polyether diamine compound (a-1)".

[Step (1)]

Step (1) is a step of mixing the above-described polyether diamine compound (a-1) and the above-described $\alpha,\omega$-linear aliphatic dicarboxylic acid and heating them to form a molten mixture.

By going through Step (1), the resulting polyether polyamide is less in odor and coloration, and a resin having a more excellent rate of tensile elongation at break can be formed. It may be presumed that this is caused due to the fact that by going through Step (1), the polyether diamine compound (a-1) and the $\alpha,\omega$-linear aliphatic dicarboxylic acid compound are uniformly melted and mixed, and therefore, in a synthesis process of a polyether polyamide, before the temperature in the reaction vessel reaches a temperature at which the decomposition of the polyether diamine compound (a-1) proceeds, the polyether diamine compound (a-1) is (poly)condensed with the $\alpha,\omega$-linear aliphatic dicarboxylic acid compound and stabilized. That is, it may be considered that by going through Step (1), in the synthesis process of a polyether polyamide, deterioration of the polyether diamine compound (a-1) by thermal history or the like is prevented and efficiently incorporated into the polyether polyamide, and as a result, a decomposition product derived from the polyether diamine compound (a-1) is hardly formed.

It is possible to perform evaluation on what degree the polyether diamine compound (a-1) in the reaction system is stabilized, by determining an incorporation rate. The incorporation rate is also dependent upon the kind of the $\alpha,\omega$-linear aliphatic dicarboxylic acid compound, and the more increased the carbon number of the straight chain of the $\alpha,\omega$-linear aliphatic dicarboxylic acid compound, the higher the incorporation rate of the polyether diamine compound (a-1) is; however, by going through Step (1), the incorporation rate becomes higher.

The incorporation rate of the above-described polyether diamine compound (a-1) can be determined by the following method.

(1) 0.2 g of the resulting polyether polyamide (A) is dissolved in 2 mL of hexafluoroisopropanol (HFIP).
(2) The solution obtained in (1) is added dropwise to 100 mL of methanol to perform reprecipitation.
(3) A reprecipitate obtained in (2) is filtered with a membrane filter having an opening of 10 $\mu$m.
(4) A residue on the filter as obtained in (3) is dissolved in heavy HFIP (manufactured by Sigma-Aldrich) and analyzed by means of $^1$H-NMR (AV400M, manufactured by Bruker BioSpin K.K.), and a copolymerization rate (a) between the polyether diamine compound (a-1) and the xylylenediamine (a-2) of the residue on the filter is calculated. The copolymerization ratio is calculated from a ratio of a spectral peak area assigned to the xylylenediamine (a-2) and a spectral peak area assigned to the polyether diamine compound (a-1).

(5) The incorporation rate of the polyether diamine compound (a-1) is calculated according to the following equation.

$$\text{Incorporation rate of polyester diamine compound (a-1)} = a/b \times 100\ (\%)$$

a: Copolymerization ratio of the constituent unit derived from the polyether diamine compound (a-1) of the residue on the filter relative to all of the diamine constituent units, as calculated in (4)
b: Copolymerization ratio of the constituent unit derived from the polyether diamine compound (a-1) relative to all of the diamine constituent units, as calculated from the charge amount at the time of polymerization

First of all, in Step (1), the polyether diamine compound (a-1) and the α,ω-linear aliphatic dicarboxylic acid compound are previously charged in a reaction vessel, and the polyether diamine compound (a-1) in a molten state and the α,ω-linear aliphatic dicarboxylic acid compound in a molten state are mixed.
In order to render both the polyether diamine compound (a-1) and the α,ω-linear aliphatic dicarboxylic acid compound in a molten state,

(i) The solid α,ω-linear aliphatic dicarboxylic acid compound and the liquid or solid polyether diamine compound (a-1) may be charged in a reaction vessel and then melted by heating to the melting point of the α,ω-linear aliphatic dicarboxylic acid compound or higher;
(ii) The melted α,ω-linear aliphatic dicarboxylic acid compound may be charged in a reaction vessel having the liquid or solid polyether diamine compound (a-1) charged therein;
(iii) The liquid or solid polyether diamine compound (a-1) may be charged in a reaction vessel having the α,ω-linear aliphatic dicarboxylic acid compound in a molten state charged therein; or
(iv) A mixture prepared by previously mixing the melted polyether diamine compound (a-1) and the melted α,ω-linear aliphatic dicarboxylic acid compound may be charged in a reaction vessel.

In the foregoing (i) to (iv), on the occasion of charging the polyether diamine compound (a-1) and/or the α,ω-linear aliphatic dicarboxylic acid compound in a reaction vessel, the compound or compounds may be dissolved or dispersed in an appropriate solvent. On that occasion, examples of the solvent include water and the like.
In addition, from the viewpoint of producing a polyether polyamide with less coloration, in charging the polyether diamine compound (a-1) and the α,ω-linear aliphatic dicarboxylic acid compound in a reaction vessel, it is preferable to thoroughly purge the inside of the reaction vessel with an inert gas.
In the case of the foregoing (i), it is preferable to purge the inside of the reaction vessel with an inert gas before melting; in the case of the foregoing (ii) or (iii), it is preferable to purge the inside of the reaction vessel with an inert gas before charging the melted α,ω-linear aliphatic dicarboxylic acid compound; and in the case of the foregoing (iv), it is preferable to purge the inside of the reaction vessel with an inert gas before charging the above-described mixture.
Subsequently, in Step (1), the above-described mixture of the polyether diamine compound (a-1) in a molten state and the α,ω-linear aliphatic dicarboxylic acid compound in a molten state is heated.
A heating temperature on the occasion of heating the above-described mixture is preferably the melting point of the α,ω-linear aliphatic dicarboxylic acid compound or higher; more preferably in the range of from the melting point of the α,ω-linear aliphatic dicarboxylic acid compound to (the melting point + 40°C); and still more preferably in the range of from the melting point of the α,ω-linear aliphatic dicarboxylic acid compound to (the melting point + 30°C).
In addition, the heating temperature at a point of time of finish of Step (1) is preferably from the melting point of the α,ω-linear aliphatic dicarboxylic acid compound to (the melting point + 50°C). When the heating temperature is the melting point of the α,ω-linear aliphatic dicarboxylic acid compound or higher, the mixed state of the polyether diamine compound (a-1) and the α,ω-linear aliphatic dicarboxylic acid compound becomes uniform, so that the effects of the present invention can be sufficiently revealed. In addition, when the heating temperature is not higher than (the melting point of the α,ω-linear aliphatic dicarboxylic acid compound + 50°C), there is no concern that the thermal decomposition of the polyether diamine compound (a-1) and the α,ω-linear aliphatic dicarboxylic acid compound proceeds.
Incidentally, the melting point of the α,ω-linear aliphatic dicarboxylic acid compound can be measured by means of differential scanning calorimetry (DSC) or the like.
A heating time in Step (1) is generally from about 15 to 120 minutes. By allowing the heating time to fall within the foregoing range, the mixed state of the polyether diamine compound (a-1) and the α,ω-linear aliphatic dicarboxylic acid compound can be made thoroughly uniform, and there is no concern that the thermal decomposition proceeds.
In Step (1), the molten mixture in which the polyether diamine compound (a-1) in a molten state and the α,ω-linear aliphatic dicarboxylic acid compound in a molten state are uniformly mixed as described above is obtained. In addition, meanwhile, in Step (1), it is preferable that from 30 to 100% by mole of an amino group in the whole of the

charged polyether diamine compound (a-1) is (poly)condensed with the α,ω-linear aliphatic dicarboxylic acid compound to form an oligomer or polymer. From this fact, the above-described molten mixture obtained in Step (1) may further contain the above-described melted oligomer or polymer.

In Step (1), a degree of (poly)condensation between the polyether diamine compound (a-1) and the α,ω-linear aliphatic dicarboxylic acid compound as described above varies with a combination of the polyether diamine compound (a-1) and the α,ω-linear aliphatic dicarboxylic acid compound, a mixing ratio thereof, a temperature of the reaction vessel on the occasion of mixing, or a mixing time; however, before Step (2) of adding the diamine component other than the polyether diamine compound (a-1), it is preferable that 30% by mole or more of the amino group of the whole of the charged polyether diamine compound (a-1) is (poly)condensed with the α,ω-linear aliphatic dicarboxylic acid compound, it is more preferable that 50% by mole or more of the amino group of the whole of the charged polyether diamine compound (a-1) is (poly)condensed with the α,ω-linear aliphatic dicarboxylic acid compound, and it is still more preferable that 70% by mole or more of the amino group of the whole of the charged polyether diamine compound (a-1) is (poly)condensed with the α,ω-linear aliphatic dicarboxylic acid compound.

A rate of reaction of the amino group of the whole of the polyether diamine compound can be calculated according to the following equation. Rate of reaction of amino group = (1 - [$NH_2$ in Step (1)]/[$NH_2$ in (a-1)]) $\times$100 [$NH_2$ in (a-1)]: Terminal amino group concentration calculated on the occasion of assuming that the whole of the polyether diamine compound (a-1) and the α,ω-linear aliphatic dicarboxylic acid compound as charged are in an unreacted state [$NH_2$ in Step (1)]: Terminal amino group concentration of the mixture in Step (1)

In addition, in Step (1), on the occasion of charging the polyether diamine compound (a-1) and the α,ω-linear aliphatic dicarboxylic acid compound in the reaction vessel, a phosphorus atom-containing compound and an alkali metal compound as described later may be added.

[Step (2)]

Step (2) is a step of adding a diamine component other than the above-described polyether diamine compound (a-1), including the xylylene diamine (a-2) and the like (hereinafter sometimes abbreviated as "xylylenediamine (a-2), etc.") to the molten mixture obtained in Step (1).

In Step (2), a temperature in the reaction vessel on the occasion of adding the xylylenediamine (a-2), etc. is preferably a temperature of the melting point of the formed polyether amide oligomer or higher and up to (the melting point + 30°C). When the temperature in the reaction vessel on the occasion of adding the xylylenediamine (a-2), etc. is a temperature of the melting point of the polyether amide oligomer composed of the molten mixture of the polyether diamine compound (a-1) and the α,ω-linear aliphatic dicarboxylic acid compound and the xylylenediamine (a-2), etc. or higher and up to (the melting point + 30°C), there is no possibility that the reaction mixture is solidified in the reaction vessel, and there is less possibility that the reaction mixture is deteriorated, and hence, such is preferable.

Though the above-described addition method is not particularly limited, it is preferable to continuously add dropwise the xylylenediamine (a-2), etc. while controlling the temperature in the reaction vessel within the foregoing temperature range, and it is more preferable to continuously raise the temperature in the reaction vessel with an increase of the amount of dropwise addition of the xylylenediamine (a-2), etc.

In addition, it is preferable that at a point of time of completion of addition of the whole amount of the diamine component including the xylylenediamine (a-2), etc., the temperature in the reaction vessel is from the melting point of the produced polyether polyamide to (the melting point + 30°C). When at a point of time of completion of addition of the xylylenediamine (a-2), etc., the temperature in the reaction vessel is a temperature of the melting point of the resulting polyether amide (A) or higher and up to (the melting point + 30°C), there is no possibility that the reaction mixture is solidified in the reaction vessel, and there is less possibility that the reaction mixture is deteriorated, and hence, such is preferable.

Incidentally, the melting point of the polyether amide oligomer or polyether polyamide as referred to herein can be confirmed by means of DSC or the like with respect to a material obtained by previously mixing the polyether diamine compound (a-1), the xylylenediamine (a-2), etc., and the dicarboxylic acid compound in a prescribed molar ratio and melting and mixing them in a nitrogen gas stream for at least about one hour under a heating condition to such an extent that the mixture is melted.

During this period, it is preferable that the inside of the reaction vessel is purged with nitrogen. In addition, during this period, it is preferable that the inside of the reaction vessel is mixed using a stirring blade, thereby rendering the inside of the reaction vessel in a uniform fluidized state.

An addition rate of the xylylenediamine (a-2), etc. is chosen in such a manner that the reaction system is held in a uniform molten state while taking into consideration heat of formation of an amidation reaction, a quantity of heat to be consumed for distillation of condensation formed water, a quantity of heat to be fed into the reaction mixture from a heating medium through a reaction vessel wall, a structure of a portion at which the condensation formed water and the raw material compounds are separated from each other, and the like.

Though a time required for addition of the xylylenediamine (a-2), etc. varies with a scale of the reaction vessel, it is generally in the range of from 0.5 to 5 hours, and more preferably in the range of from 1 to 3 hours. When the time falls within the foregoing range, not only the solidification of the polyether amide oligomer and the polyether polyamide (A) formed in the reaction vessel can be suppressed, but the coloration due to thermal history of the reaction system can be suppressed.

During addition of the xylylenediamine (a-2), etc., condensed water formed with the progress of reaction is distilled outside the reaction system. Incidentally, the raw materials such as the scattered diamine compound and dicarboxylic acid compound, etc. are separated from condensed water and returned into the reaction vessel; and in this respect, it is possible to control an amount thereof, and the amount can be controlled by, for example, controlling a temperature of a reflux column to an optimum range or controlling a filler of a packing column, such as so-called Raschig ring, Lessing ring, saddle, etc. to appropriate shape and filling amount. For separation of the raw materials from condensed water, a partial condenser is suitable, and it is preferable to distill off condensed water through a total condenser.

In the above-described Step (2), a pressure in the inside of the reaction vessel is preferably from 0.1 to 0.6 MPa, and more preferably from 0.15 to 0.5 MPa. When the pressure in the inside of the reaction vessel is 0.1 MPa or more, scattering of the unreacted xylylenediamine (a-2), etc. and dicarboxylic acid compound outside the system together with condensed water can be suppressed. For the purpose of preventing scattering of the unreacted xylylenediamine (a-2), etc. and dicarboxylic acid compound outside the system, the scattering can be suppressed by increasing the pressure in the inside of the reaction vessel; however, it can be thoroughly suppressed at a pressure of 0.6 MPa or less. When the pressure in the reaction vessel is more than 0.6 MPa, more energy is required for distilling condensed water outside the reaction system because there is a concern that the boiling point of the condense water becomes high or the like, so that it is necessary to allow a high-temperature heating medium to pass by a partial condenser, and hence, such is not preferable.

In the case of applying a pressure, it may be performed by using an inert gas such as nitrogen, etc., or it may be performed by using a steam of condensed water formed during the reaction. In the case where the pressure has been applied, after completion of addition of the xylylenediamine (a-2), etc., the pressure is reduced until it reaches atmospheric pressure.

[Step (3)]

After completion of Step (2), though the polycondensation reaction may be finished, Step (3) of further continuing the polycondensation reaction may be performed at atmospheric pressure or negative pressure for a fixed period of time.

In the case of further continuing the polycondensation reaction at negative pressure, it is preferable to perform pressure reduction such that the pressure of the reaction system is finally 0.08 MPa or less. Though the time of from completion of addition of the xylylenediamine (a-2), etc. to start of the pressure reduction is not particularly limited, it is preferable to start the pressure reduction within 30 minutes after completion of addition. As for a pressure reduction rate, a rate such that the unreacted xylylenediamine (a-2), etc. is not distilled outside the system together with water during the pressure reduction is chosen, and for example, it is chosen from the range of from 0.1 to 1 MPa/hr. When the pressure reduction rate is made slow, not only a time required for the production increases, but a lot of time is required for the pressure reduction, so that there is a concern that heat deterioration of the resulting polyether polyamide (A) is caused; and hence, such is not preferable.

A temperature of the reaction vessel in Step (3) is preferably a temperature at which the resulting polyether polyamide (A) is not solidified, namely a temperature in the range of from the melting point of the polyether polyamide (A) to (the melting point + 30°C). Incidentally, the melting point of the polyether polyamide as referred to herein can be confirmed by means of DSC or the like.

A polycondensation reaction time in Step (3) is generally 120 minutes or less. When the polymerization time is allowed to fall within the foregoing range, the molecular weight of the polyether polyamide (A) can be sufficiently increased, and furthermore, coloration of the resulting polymer can be suppressed.

After completion of the polycondensation reaction, a method of taking out the polyether polyamide (A) from the reaction vessel is not particularly limited, and a known technique can be adopted; however, from the viewpoints of productivity and sequent handling properties, a technique in which while extracting a strand through a strand die heated at a temperature of from the melting point of the polyether polyamide (A) to (the melting point + 50°C), the strand of the molten resin is cooled in a water tank and then cut by a pelletizer to obtain pellets, or so-called hot cutting or underwater cutting, or the like is preferable. On that occasion, for the purpose of increasing or stabilizing a discharge rate of the polyether polyamide (A) from the strand die, or the like, the inside of the reaction vessel may be pressurized. In the case of applying a pressure, in order to suppress deterioration of the polyether polyamide (A), it is preferable to use an inert gas.

It is preferable that the polyether polyamide (A1) or (A2) is produced by a melt polycondensation (melt polymerization) method by addition of a phosphorus atom-containing compound. The melt polycondensation method is preferably a method in which the diamine component is added dropwise to the dicarboxylic acid component having been

melted at atmospheric pressure, and the mixture is polymerized in a molten state while removing condensed water.

In the polycondensation system of the polyether polyamide (A1) or (A2), a phosphorus atom-containing compound can be added within the range where properties thereof are not hindered. Examples of the phosphorus atom-containing compound which can be added include dimethylphosphinic acid, phenylmethylphosphinic acid, hypophosphorous acid, sodium hypophosphite, potassium hypophosphite, lithium hypophosphite, ethyl hypophosphite, phenylphosphonous acid, sodium phenylphosphonoate, potassium phenylphosphonoate, lithium phenylphosphonoate, ethyl phenylphosphonoate, phenylphosphonic acid, ethylphosphonic acid, sodium phenylphosphonate, potassium phenylphosphonate, lithium phenylphosphonate, diethyl phenylphosphonate, sodium ethylphosphonate, potassium ethylphosphonate, phosphorous acid, sodium hydrogen phosphite, sodium phosphite, triethyl phosphite, triphenyl phosphite, pyrrophosphorous acid, and the like; and of these, in particular, hypophosphorous acid metal salts such as sodium hypophosphite, potassium hypophosphite, lithium hypophosphite, etc. are preferably used because they are high in terms of an effect for promoting the amidation reaction and also excellent in terms of a coloration preventing effect, with sodium hypophosphite being especially preferable. The phosphorus atom-containing compound which can be used in the present invention is not limited to these compounds. The addition amount of the phosphorus atom-containing compound which is added in the polycondensation system is preferably from 1 to 1,000 ppm, more preferably from 5 to 1,000 ppm, and still more preferably from 10 to 1,000 ppm as converted into a phosphorus atom concentration in the polyether polyamide (A1) or (A2) from the viewpoints of favorable appearance and molding processability.

In addition, it is preferable to add an alkali metal compound in combination with the phosphorus atom-containing compound in the polycondensation system of the polyether polyamide (A1) or (A2). In order to prevent the coloration of the polymer during the polycondensation, it is necessary to allow a sufficient amount of the phosphorus atom-containing compound to exist; however, under certain circumstances, there is a concern that gelation of the polymer is caused, and therefore, in order to also adjust an amidation reaction rate, it is preferable to allow an alkali metal compound to coexist. As the alkali metal compound, alkali metal hydroxides and alkali metal acetates are preferable. Examples of the alkali metal compound which can be used in the present invention include lithium hydroxide, sodium hydroxide, potassium hydroxide, rubidium hydroxide, cesium hydroxide, lithium acetate, sodium acetate, potassium acetate, rubidium acetate, cesium acetate, and the like; however, the alkali metal compound can be used without being limited to these compounds. In the case of adding the alkali metal compound in the polycondensation system, a value obtained by dividing the molar number of the compound by the molar number of the phosphorus atom-containing compound is regulated to preferably from 0.5 to 1, more preferably from 0.55 to 0.95, and still more preferably from 0.6 to 0.9. When the subject value falls within the foregoing range, an effect for appropriately suppressing the promotion of the amidation reaction of the phosphorus atom-containing compound is brought; and therefore, the occurrence of the matter that the polycondensation reaction rate is lowered due to excessive suppression of the reaction, so that thermal history of the polymer increases, thereby causing an increase of gelation of the polymer can be avoided.

A sulfur atom concentration of the polyether polyamide (A1) or (A2) is preferably from 1 to 200 ppm, more preferably from 10 to 150 ppm, and still more preferably from 20 to 100 ppm. When the sulfur atom concentration falls within the foregoing range, not only an increase of yellowness (YI value) of the polyether polyamide at the time of production can be suppressed, but an increase of the YI value on the occasion of melt molding the polyether polyamide can be suppressed, thereby making it possible to suppress the YI value of the resulting polyether polyamide fiber at a low level.

Furthermore, in the case of using sebacic acid as the dicarboxylic acid, its sulfur atom concentration is preferably from 1 to 500 ppm, more preferably from 1 to 200 ppm, still more preferably from 10 to 150 ppm, and especially preferably from 20 to 100 ppm. When the sulfur atom concentration falls within the foregoing range, an increase of the YI value on the occasion of polymerizing the polyether polyamide and on the occasion of melt molding the polyether polyamide can be suppressed, thereby making it possible to suppress the YI value of the resulting polyether polyamide fiber at a low level.

Similarly, in the case of using sebacic acid as the dicarboxylic acid, its sodium atom concentration is preferably from 1 to 500 ppm, more preferably from 10 to 300 ppm, and still more preferably from 20 to 200 ppm. When the sodium atom concentration falls within the foregoing range, the reactivity on the occasion of synthesizing the polyether polyamide is good, the molecular weight can be easily controlled to an appropriate range, and furthermore, the use amount of the alkali metal compound which is blended for the purpose of adjusting the amidation reaction rate as described above can be made small. In addition, an increase of the viscosity on the occasion of melt molding the polyether polyamide can be suppressed, and not only the moldability becomes favorable, but the generation of scorch at the time of molding processing can be suppressed, and therefore, the quality of the resulting polyether polyamide fiber tends to be enhanced.

Such sebacic acid is preferably plant-derived sebacic acid. In view of the fact that the plant-derived sebacic acid contains sulfur compounds or sodium compounds as impurities, the polyether polyamide containing, as a constituent unit, a unit derived from plant-derived sebacic acid is low in terms of the YI value even when an antioxidant is not added, and the YI value of the resulting polyether polyamide fiber is also low. In addition, it is preferable to use the plant-derived sebacic acid without excessively purifying the impurities. Since it is not necessary to excessively purify the impurities, such is advantageous from the standpoint of costs, too.

In the case of the plant-derived sebacic acid, its purity is preferably from 99 to 100% by mass, more preferably from 99.5 to 100% by mass, and still more preferably from 99.6 to 100% by mass. When the purity of the plant-derived sebacic acid falls within this range, the quality of the resulting polyether polyamide becomes favorable, so that the polymerization is not affected, and hence, such is preferable.

For example, an amount of other dicarboxylic acid (e.g., 1,10-decamethylenedicarboxylic acid, etc.) which is contained in the sebacic acid is preferably from 0 to 1% by mass, more preferably from 0 to 0.7% by mass, and still more preferably from 0 to 0.6% by mass. When the amount of the other dicarboxylic acid falls within this range, the quality of the resulting polyether polyamide becomes favorable, so that the polymerization is not affected, and hence, such is preferable.

In addition, an amount of a monocarboxylic acid (e.g., octanoic acid, nonanoic acid, undecanoic acid, etc.) which is contained in the sebacic acid is preferably from 0 to 1% by mass, more preferably from 0 to 0.5% by mass, and still more preferably from 0 to 0.4% by mass. When the amount of the monocarboxylic acid falls within this range, the quality of the resulting polyether polyamide becomes favorable, so that the polymerization is not affected, and hence, such is preferable.

A hue (APHA) of the sebacic acid is preferably 100 or less, more preferably 75 or less, and still more preferably 50 or less. When the hue of the sebacic acid falls within this range, the YI value of the resulting polyether polyamide is low, and hence, such is preferable. Incidentally, the APHA can be measured in conformity with the Standard Methods for the Analysis of Fats, Oils and Related Materials by the Japan Oil Chemists' Society.

The polyether polyamide (A 1) or (A2) obtained by the melt polycondensation is once taken out, pelletized, and then dried for use. In addition, for the purpose of further increasing the degree of polymerization, solid phase polymerization may also be performed. As a heating apparatus which is used for drying or solid phase polymerization, a continuous heat drying apparatus, a rotary drum type heating apparatus called, for example, a tumble dryer, a conical dryer, a rotary dryer, etc.. or a cone type heating apparatus equipped with a rotary blade in the inside thereof, called a Nauta mixer, can be suitably used; however, the heating apparatus is not limited to these apparatuses, and known methods and apparatuses can be used.

The polyether polyamide fiber of the present invention has only to contain at least the above-described polyether polyamide (A1) or (A2), and the polyether polyamide (A1) or (A2) may also be formed in a fiber shape as it is. A content of the polyether polyamide (A1) or (A2) in the polyether polyamide fiber of the present invention is preferably from 1 to 100% by mass, more preferably from 10 to 100% by mass, still more preferably from 50 to 100% by mass, and yet still more preferably substantially 100% by mass.

In addition, the polyether polyamide fiber of the present invention may be a fiber composed of a composition containing the polyether polyamide (A1) or (A2) and further having a molecular chain extender (B) blended therein, or a composite fiber in which the polyether polyamide (A1) or (A2) and a thermoplastic resin (C) other than the polyether polyamide (A1) or (A2) are composited with each other. The molecular chain extender (B) and the thermoplastic resin (C) are hereunder described.

<Molecular chain extender (B)>

The molecular chain extender (B) which is used in the present invention is a compound capable of reacting with the polyether polyamide (A1) or (A2) to extend a molecular chain thereof and is preferably at least one member selected from a carbodiimide compound and a compound containing two or more epoxy groups in a molecule thereof.

When the molecular chain extender (B) is blended in the above-described polyether polyamide (A1) or (A2), a part or the whole of the molecular chain extender (B) reacts with the above-described polyether polyamide (A1) or (A2) at the time of melt kneading, thereby making it possible to form a polyether polyamide fiber which is high in heat aging resistance and high in elongation even when its molecular weight is low.

(Carbodiimide compound)

The carbodiimide compound which is used as the molecular chain extender (B) in the present invention is a compound having one or more carbodiimide groups in a molecule thereof.

Examples of the carbodiimide compound which is used in the present invention include aromatic or aliphatic carbodiimide compounds. Of these, from the standpoints of a degree of revealment of the effects for enhancing the heat aging resistance and elongation, melt kneading properties at the time of extrusion, and transparency of the resulting film, it is preferable to use an aliphatic carbodiimide compound, it is more preferable to use an aliphatic polycarbodiimide compound having two or more carbodiimide groups in a molecule thereof, and it is still more preferable to use a polycarbodiimide produced from 4,4'-dicyclohexylmethane diisocyanate. Examples of the polycarbodiimide produced from 4,4'-dicyclohexylmethane diisocyanate include "CARBODILITE LA-1", manufactured by Nisshinbo Holdings Inc. and the like.

As a monocarbodiimide compound having one carbodiimide group in a molecule thereof, which is included in the above-described carbodiimide compound, dicyclohexyl carbodiimide, diisopropyl carbodiimide, dimethyl carbodiimide, diisopropyl carbodiimide, dioctyl carbodiimide, t-butylisopropyl carbodiimide, diphenyl carbodiimide, di-t-butyl carbodiimide, di-β-naphthyl carbodiimide, and the like can be exemplified; and of these, dicyclohexyl carbodiimide and diisopropyl carbodiimide are especially suitable from the standpoint of easiness of industrial availability.

As a polycarbodiimide compound having two or more carbodiimide groups in a molecule thereof, which is included in the above-described carbodiimide compound, those produced by various methods can be used; however, basically, those produced by a conventional production method of a polycarbodiimide can be used. For example, a method of synthesizing a polycarbodiimide by subjecting an organic diisocyanate of every kind to a decarboxylation condensation reaction in the presence of a carbodiimidation catalyst at a temperature of about 70°C or higher in an inert solvent or without using a solvent, and the like can be exemplified.

As the organic diisocyanate that is a synthesis raw material of the above-described polycarbodiimide compound, for example, a variety of organic diisocyanates such as aromatic diisocyanates, aliphatic diisocyanates, etc., and mixtures thereof can be used. Specifically, as the organic diisocyanate, 1,5-naphthalene diisocyanate, 4,4'-diphenylmethane diisocyanate, 4,4'-diphenyldimethylmethane diisocyanate, 1,3-phenylene diisocyanate, 1,4-phenylene diisocyanate, 2,4-tolylene diisocyanate, 2,6-tolylene diisocyanate, hexamethylene diisocyanate, cyclohexane-1,4-diisocyanate, xylylene diisocyanate, isophorone diisocyanate, 4,4'-dicyclohexylmethane diisocyanate, methylcyclohexane diisocyanate, tetramethylxylylene diisocyanate, 2,6-diisopropylphenyl isocyanate, 1,3,5-triisopropylbenzene-2,4-diisocyanate, and the like can be exemplified. Of these, from the standpoint of melt kneading properties at the time of extrusion of the resulting polycarbodiimide, an aliphatic diisocyanate is preferable, and 4,4'-dicyclohexylmethane diisocyanate is more preferable.

For the purpose of sealing a terminal of the above-described polycarbodiimide compound to control a degree of polymerization thereof, a terminal sealing agent such as a monoisocyanate, etc. can be used. Examples of the monoisocyanate include phenyl isocyanate, tolyl isocyanate, dimethylphenyl isocyanate, cyclohexyl isocyanate, butyl isocyanate, naphthyl isocyanate, and the like.

Incidentally, the terminal sealing agent is not limited to the above-described monoisocyanates, but it may be an active hydrogen compound capable of reacting with the isocyanate. As such an active hydrogen compound, among aliphatic or aromatic compounds, compounds having an -OH group, including methanol, ethanol, phenol, cyclohexanol, N-methylethanolamine, polyethylene glycol monomethyl ether, and polypropylene glycol monomethyl ether; secondary amines such as diethylamine, dicyclohexylamine, etc.; primary amines such as butylamine, cyclohexylamine, etc.; carboxylic acids such as succinic acid, benzoic acid, dicyclohexanecarboxylic acid, etc.; thiols such as ethyl mercaptan, allyl mercaptan, thiophenol, etc.; compounds having an epoxy group; and the like can be exemplified.

As the carbodiimidation catalyst, metal catalysts, for example, phospholene oxides such as 1-phenyl-2-phospholene-1-oxide, 3-methyl-1-phenyl-2-phospholene-1-oxide, 1-ethyl-2-phospholene-1-oxide, 3-methyl-2-phospholene-1-oxide, and 3-phospholene isomers thereof, etc.; tetrabutyl titanate, and the like can be used; and of these, 3-methyl-1-phenyl-2-phospholene-1-oxide is suitable from the standpoint of reactivity.

A number average molecular weight (Mn) of the carbodiimide compound which is used in the present invention is preferably in the range of from 100 to 40,000, and more preferably in the range of from 100 to 30,000 from the viewpoint of dispersibility into the polyether polyamide (A1) or (A2). When the number average molecular weight (Mn) of the carbodiimide compound is 40,000 or less, the dispersibility into the polyether polyamide (A1) or (A2) is favorable, and the effects of the present invention are thoroughly obtained.

(Compound containing two or more epoxy groups in a molecule thereof)

The compound containing two or more epoxy groups in a molecule thereof, which is used as the molecular chain extender (B) in the present invention (hereinafter also referred to as "epoxy group-containing compound"), is not particularly limited so long as it is a compound containing two or more epoxy groups, and any of monomers, oligomers, and polymers can be used.

In the case where the epoxy group-containing compound is a polymer, its weight average molecular weight is preferably from 2,000 to 1,000,000, more preferably from 3,000 to 500,000, and still more preferably from 4,000 to 250,000 from the viewpoints that effects for enhancing the heat aging resistance and elongation are excellent, gelation is hardly caused, and handling properties are excellent.

Examples of the above-described epoxy group-containing compound include an epoxy group-containing (meth)acrylic polymer, an epoxy group-containing polystyrene, an epoxidized vegetable oil, a polyglycidyl ether, and the like.

Above all, the epoxy group-containing compound is preferably an epoxy group-containing (meth)acrylic polymer or a polyglycidyl ether from the viewpoints that effects for enhancing the heat aging resistance and elongation are excellent, and gelation is hardly caused. In addition, the epoxy group-containing compound is more preferably an epoxy group-containing (meth)acrylic polymer from the viewpoints that effects for enhancing the durability, heat aging resistance,

and elongation are excellent, and gelation is hardly caused. As the epoxy group-containing (meth)acrylic polymer, one that is solid at ordinary temperature is especially preferable.

The epoxy group-containing (meth)acrylic polymer is hereunder described. The epoxy group-containing (meth)acrylic polymer as the molecular chain extender (B) is not particularly limited so long as it is a polymer in which its main chain is a (meth)acrylic polymer, and it contains two or more epoxy groups in a molecule thereof. Incidentally, in the present invention, the term "(meth)acrylic" means either one or both of "acrylic" and ""methacrylic".

The (meth)acrylic polymer as a main chain may be either a homopolymer or a copolymer. Examples of the epoxy group-containing (meth)acrylic polymer include a methyl methacrylate-glycidyl methacrylate copolymer, a methyl methacrylate-styrene-glycidyl methacrylate copolymer, and the like.

Above all, the epoxy group-containing (meth)acrylic polymer is preferably a methyl methacrylate-glycidyl methacrylate copolymer or a methyl methacrylate-styrene-glycidyl methacrylate copolymer from the viewpoints that effects for enhancing the heat aging resistance and elongation are excellent, gelation is hardly caused, and handling properties are excellent.

A weight average molecular weight of the epoxy group-containing (meth)acrylic polymer is preferably from 3,000 to 300.000, and more preferably from 4,000 to 250,000 from the viewpoints that effects for enhancing the heat aging resistance and elongation are excellent, gelation is hardly caused, and handling properties are excellent.

The polyglycidyl ether is hereunder described. The polyglycidyl ether as the epoxy group-containing compound which is used in the present invention is not particularly limited so long as it is a compound having two or more glycidyloxy groups in a molecule thereof.

Examples of the polyglycidyl ether include a polyglycidyl ether adducted with from 0 to 1 mole of glycerin/epichlorohydrin, a polyglycidyl ether adducted with from 0 to 2 moles of ethylene glycol-epichlorohydrin, polyethylene glycol-diglycidyl ether, neopentyl glycol-diglycidyl ether, trimethylolpropane-polyglycidyl ether, and the like.

An epoxy equivalent of the epoxy group-containing compound which is used in the present invention is preferably from 170 to 3,300 g/eq., and more preferably from 200 to 2,000 g/eq. from the viewpoints that effects for enhancing the heat aging resistance and elongation are excellent, and gelation is hardly caused.

Commercially available products can be used as the epoxy group-containing compound which is used in the present invention.

Examples of the commercially available product of the epoxy group-containing (meth)acrylic polymer include JONCRYL ADR-4368 (acrylic polymer, powder, weight average molecular weight: 6,800, epoxy equivalent: 285 g/eq., manufactured by BASF SE), MARPROOF G-0150M (acrylic polymer, powder, weight average molecular weight: 8,000 to 10,000, epoxy equivalent: 310 g/eq., manufactured by NOF Corporation), and MARPROOF G-2050M (acrylic polymer, powder, weight average molecular weight: 200,000 to 250,000, epoxy equivalent: 340 g/eq., manufactured by NOF Corporation).

Examples of the commercially available product of the epoxy groups-containing polystyrene include MARPROOF G-1010S (styrene-based polymer, powder, weight average molecular weight: 100,000, epoxy equivalent: 1,700 g/eq., manufactured by NOF Corporation).

Examples of the commercially available product of the epoxidized vegetable oil include NEWSIZER 510R (manufactured by NOF Corporation) that is an epoxidized soybean oil and the like.

In the polyether polyamide fiber of the present invention, the molecular chain extender (B) can be used solely or in combination of two or more kinds thereof.

A blending amount of the molecular chain extender (B) is from 0.01 to 15 parts by mass, preferably from 0.05 to 5 parts by mass, and more preferably from 0.05 to 2 parts by mass based on 100 parts by mass of the polyether polyamide (A1) or (A2) from the viewpoints that effects for enhancing the heat aging resistance and elongation are excellent, and gelation is hardly caused.

When the above-described blending amount is 0.01 parts by mass or more, effects for enhancing the heat aging resistance and elongation can be thoroughly revealed, whereas when the blending amount is 15 parts by mass or less, it is possible to avoid generation of abrupt thickening at the time of production.

<Thermoplastic resin (C)>

In addition, the polyether polyamide fiber of the present invention may also be a composite fiber in which the polyether polyamide (A1) or (A2) and a thermoplastic resin (C) other than the polyether polyamide (A1) or (A2) (hereinafter also referred to simply as "thermoplastic resin (C)") are composited with each other. By compositing the polyether polyamide (A1) or (A2) with the thermoplastic resin (C), it is possible to allow the fiber to have physical properties or texture which could not be achieved by the polyether polyamide (A1) or (A2) alone, or it is possible to make a coil-shaped crimped yarn or the like. In addition, by heating a composite fiber composed of a combination of resins having a different melting point from each other to a temperature of the melting point of a resin having a lower melting point, or higher, only one of the resins is melted to fuse the fibers each other, whereby it becomes possible to process the composite

fiber into a cloth form, or the like.

Examples of the thermoplastic resin (C) include a polyamide resin, a polyester resin, a polyolefin resin, an acrylic resin, and the like. From the viewpoint of adhesiveness to the polyether polyamide (A1) or (A2), a polyamide resin is preferable, and from the viewpoint of a change of texture, a polyester resin, a polyolefin resin, and an acrylic resin are preferable.

As the polyamide resin, polycaproamide (nylon 6), polyundecanamide (nylon 11), polydodecanamide (nylon 12), polytetramethylene adipamide (nylon 46), polyhexamethylene adipamide (nylon 66), polyhexamethylene azelamide (nylon 69), polyhexamethylene sebacamide (nylon 610), polyundecamethylene adipamide (nylon 116), polyhexamethylene dodecamide (nylon 612), polyhexamethylene terephthalamide (nylon 6T (T represents a terephthalic acid component unit; hereinafter the same)), polyhexamethylene isophthalamide (nylon 6I (I represents an isophthalic acid component unit; hereinafter the same)), polyhexamethylene terephthalisophthalamide (nylon 6TI), polyheptamethylene terephthalamide (nylon 9T), poly-m-xylylene adipamide (nylon MXD6 (MXD represents an m-xylylenediamine component unit; hereinafter the same)), poly-m-xylylene sebacamide (nylon MXD10), poly-p-xylylene sebacamide (nylon PXD10 (PXD represents a p-xylylenediamine component unit)), a polyamide resin obtained by polycondensation of 1,3- or 1,4-bis(aminomethyl)cyclohexane and adipic acid (nylon 1,3-/1,4-BAC6 (BAC represents a bis(aminomethyl)cyclohexane component unit), and copolymerized amides thereof, and the like can be used.

Examples of the polyester resin include a polyethylene terephthalate resin, a polyethylene terephthalate-isophthalate copolymer resin, a polyethylene-1,4-cyclohexane dimethylene-terephthalate copolymer resin, a polyethylene-2,6-naphthalene dicarboxylate resin, a polyethylene-2,6-naphthalene dicarboxylate-terephthalate copolymer resin, a polyethylene-terephthalate-4,4'-biphenyl dicarboxylate copolymer resin, a poly-1,3-propylene-terephthalate resin, a polybutylene terephthalate resin, a polybutylene-2,6-naphthalene dicarboxylate resin, and the like. Examples of the more preferred polyester resin include a polyethylene terephthalate resin, a polyethylene terephthalate-isophthalate copolymer resin, a polybutylene terephthalate resin, and a polyethylene-2,6-naphthalene dicarboxylate resin.

Examples of the polyolefin resin include polyethylenes such as low density polyethylene (LDPE), linear low density polyethylene (LLDPE), very low density polyethylene (VLDPE), medium density polyethylene (MDPE), high density polyethylene (HDPE), etc.; polypropylenes such as a propylene homopolymer, a random or block copolymer of propylene and ethylene or an $\alpha$-olefin, etc.; mixtures of two or more kinds thereof; and the like. A majority of the polyethylenes is a copolymer of methylene and an $\alpha$-olefin. In addition, the polyolefin resin includes a modified polyolefin resin modified with a small amount of a carboxyl group-containing monomer such as acrylic acid, maleic acid, methacrylic acid, maleic anhydride, fumaric acid, itaconic acid, etc. The modification is in general performed by means of copolymerization or graft modification.

Examples of the acrylic resin include a homopolymer of a (meth)acrylic acid ester, a copolymer of two or more kinds of different (meth)acrylic acid ester monomers, and a copolymer of a (meth)acrylic acid ester and other monomer(s); and specifically, examples thereof include (meth)acrylic resins composed of a homo- or copolymer containing a (meth)acrylic acid ester, such as polymethyl (meth)acrylate, polyethyl (meth)acrylate, polypropyl (meth)acrylate, polybutyl (meth)acrylate, a methyl (meth)acrylate/butyl (meth)acrylate copolymer, an ethyl (meth)acrylate/butyl (meth)acrylate copolymer, an ethylene/methyl (meth)acrylate copolymer, a styrene/methyl (meth)acrylate copolymer, etc.

In the case of compositing the polyether polyamide (A1) or (A2) with the above-described thermoplastic resin (C), the use amount of the thermoplastic resin (C) may be determined according to the physical properties required for the composite fiber. For example, in the case of attaching importance to the physical properties of the polyether polyamide (A1) or (A2), the thermoplastic resin (C) can be composited in the polyether polyamide fiber in a proportion of preferably from 1 to 50% by mass, more preferably from 5 to 30% by mass, and still more preferably from 10 to 20% by mass. On the other hand, in the case of attaching importance to the physical properties of the thermoplastic resin (C), the thermoplastic resin (C) can be composited in the polyether polyamide fiber in a proportion of preferably from 50 to 99% by mass, more preferably from 55 to 95% by mass, and still more preferably from 60 to 90% by mass.

<Other components>

The polyether polyamide fiber of the present invention can be blended with additives such as a matting agent, an ultraviolet ray absorber, a nucleating agent, a plasticizer, a flame retarder, an antistatic agent, a coloration preventive, a gelation preventive, etc. as the need arises within the range where properties thereof are not hindered.

In addition, a material in which a thermoplastic resin the same as the above-described thermoplastic resin (C), such as a polyamide resin, a polyester resin, a polyolefin resin, an acrylic resin, etc., is blended in the polyether polyamide (A1) or (A2) can also be used for the polyether polyamide fiber of the present invention within the range where properties of the polyether polyamide fiber are not hindered. According to this, a fiber which is excellent in terms of toughness, flexibility, tensile elongation at break, and the like can be obtained.

<Production method of polyether polyamide fiber

A production method of the polyether polyamide fiber of the present invention is not particularly limited, and a known method can be adopted. Examples thereof include a method in which the above-described polyether polyamide (A1) or (A2) is blended with the molecular chain extender (B), the thermoplastic resin (C), and other component(s) as the need arises; the blend is melt kneaded by using a single-screw or twin-screw extruder to prepare a composition; and the composition is subsequently spun out through a spinneret and taken off into a coolant bath positioned below the surface of the spinneret or into air, to obtain an unstretched yarn, followed by stretching.

As the single-screw or twin-screw extruder, a variety of generally used extruders can be arbitrarily used, and the extrusion can also be performed while removing a low-molecular weight component or water by a vacuum bent or an open vent. The stretching of unstretched yarns may be performed by heating the unstretched yarns in a simultaneous process as they are and changing the step in plural stretch ratios, or may be performed by heating in a separate process and then performing stretching in plural stretch ratios. When the stretching is performed in plural processes by changing the stretch ratio, the strength of the fiber can be increased, and hence, such is preferable. On that occasion, it is preferable that the stretch ratio is decreased every time of going through the stretching process, and for example, the stretch ratio can be set up to from about 2 to 8 times in a first process, from about 1.3 to 1.8 times in a second process, about 1.2 times in a third process, and about 1.1 times in a fourth process, respectively.

In the case of using the molecular chain extender (B) or the thermoplastic resin (C), a blending method thereof is not particularly limited, and examples thereof include a technique in which the molecular chain extender (B) or the thermoplastic resin (C) is blended in the polyether polyamide (A1) or (A2) in a molten state in a reaction tank; a technique in which the molecular chain extender (B) or the thermoplastic resin (C) is dry blended in the polyether polyamide (A1) or (A2), followed by melt kneading; and the like. In addition, a method of dry blending a master batch of the molecular chain extender (B), and the like are exemplified.

A temperature of the above-described melt kneading is set up preferably to the range of the melting point of the polyether polyamide (A1) or (A2) or higher and up to a temperature that is higher by 50°C than the melting point, and more preferably to the range of a temperature that is higher by from 10 to 30°C than the melting point of the component (A1) or (A2). When the melt kneading temperature is the melting point of the polyether polyamide (A1) or (A2) or higher, the solidification of the component (A1) or (A2) can be suppressed, whereas when it is not higher than a temperature that is higher by 50°C than the melting point, the heat deterioration of the component (A1) or (A2) can be suppressed.

In the present invention, a draft ratio in the case of fabricating a monofilament (a ratio AD/AM of a cross-sectional area AD of a spinneret of a spinning machine to a cross-sectional area AM of an unstretched yarn obtained by extrusion from a spinning machine and then cooling in a cooling tank) is preferably from 1.0 to 3.0. When the draft ratio is 1.0 or more, it becomes possible to fabricate a stretched yarn. In addition, when the draft ratio is 3.0 or less, an influence of extrusion and cooling conditions against the unstretched yarn becomes small.

In addition, in the present invention, the cross-sectional area AM of an unstretched yarn obtained by extrusion from a spinning machine and then cooling in a cooling tank as described above is defined according to the following equation.

$$AM\ (cm^2) = G/(L \times \rho)$$

Here, G (g) represents a weight of an unstretched yarn having a density ρ (g/cm$^3$) in a length L (cm).

In addition, in the present invention, in the case of fabricating a monofilament, it is preferable that an air layer for preventing rapid cooling of the yarn is allowed to intervene between a discharge port of the molten composition of the spinning machine and a surface of a coolant bath for cooling. During this period, when the air layer is made to substantially exist, it is possible to avoid a problem, for example, yarn sway to be caused due to boiling of the coolant when the molten resin comes into contact with the coolant, or generation of a vacuum bubble to be caused due to rapid cooling of the yarn, or the like. From such standpoints, a thickness of the above-described air layer, namely a distance between the discharge port of the molten composition of the spinning machine and the surface of the coolant bath for cooling (hereinafter referred to as "air gap") is practically from 10 to 150 mm, and preferably from 10 to 110 mm. When the air gap is 10 mm or more, the above-described problem such as yarn sway or generation of a vacuum bubble, etc. can be avoided, whereas when the air layer is 110 mm or less as described above, draw down of the molten composition, or the like can be avoided.

<Shape of polyether polyamide fiber>

A fineness (dtex) of the above-obtained polyether polyamide fiber of the present invention is not particularly

limited and can be properly chosen within a spinnable range. In addition, the polyether polyamide fiber of the present invention may be either a monofilament composed of a single filament or a multifilament composed of two or more filaments.

In the case where the polyether polyamide fiber is a monofilament, its fineness is preferably from 50 to 12,000 dtex, and more preferably from 100 to 10,000 dtex.

In the case where the polyether polyamide fiber of the present invention is a multifilament, its fineness is preferably from 1 to 10,000 dtex, more preferably from 10 to 5,000 dtex, and still more preferably from 20 to 2,000 dtex. The number of filaments is not particularly limited, and it is preferably from 2 to 500, more preferably from 4 to 300, still more preferably from 8 to 200, and yet still more preferably from 12 to 150.

In addition, the polyether polyamide fiber of the present invention may also be a microfiber having a fineness of preferably from 0.001 to 1 dtex, and more preferably from 0.005 to 0.15 dtex. When the polyether polyamide fiber of the present invention is a microfiber, quick drying properties are revealed, and therefore, in the case of using for clothes and the like, it is excellent in comfortableness to wear.

Specifically, the above-described fineness of the polyether polyamide fiber is defined according to JIS L0101 and measured by a method as described in the Examples.

In addition, the cross-sectional shape of the polyether polyamide fiber of the present invention is not particularly limited, and it may be either a true circle shape or an irregular cross-sectional shape; however, from the viewpoint of texture or the like, a fiber having an irregular cross-sectional shape, in which a surface area can be increased, is preferable. Examples of the irregular cross-sectional shape include polygons such as an X form, a triangle, a star shape, a pentagon, etc.

<Physical properties of polyether polyamide fiber>

In the following description of physical properties, the "polyether polyamide fiber" means a polyether polyamide fiber containing the polyether polyamide (A1) or a polyether polyamide fiber containing the polyether polyamide (A2) unless otherwise specifically indicated.

A tensile strength of the polyether polyamide fiber of the present invention (measurement temperature: 23°C, humidity: 50% RH) is preferably 1 cN/dtex or more, more preferably 2 cN/dtex or more, still more preferably 3 cN/dtex or more, and yet still more preferably 5 cN/dtex or more from the viewpoints of flexibility and mechanical strength.

In addition, in the case of forming the polyether polyamide fiber of the present invention in a film shape, in the case of the polyether polyamide fiber containing the polyether polyamide (A1), its tensile modulus (measurement temperature: 23°C, humidity: 50% RH) is preferably 100 MPa or more, more preferably 200 MPa or more, still more preferably 300 MPa or more, and yet still more preferably 500 MPa or more from the viewpoints of flexibility and mechanical strength. In addition, in the case of the polyether polyamide fiber containing the polyether polyamide (A2), its tensile modulus is preferably 100 MPa or more, more preferably 200 MPa or more, still more preferably 300 MPa or more, yet still more preferably 350 MPa or more, and even yet still more preferably 400 MPa or more. Specifically, the tensile modulus is measured by a method described in the Examples.

In the case of forming the polyether polyamide fiber of the present invention in a film shape, in the case of the polyether polyamide fiber containing the polyether polyamide (A1), its rate of tensile elongation at break (measurement temperature: 23°C, humidity: 50% RH) is preferably 100% or more, more preferably 200% or more, still more preferably 300% or more, and yet still more preferably 400% or more from the viewpoint of flexibility. In addition, in the case of a polyester polyamide fiber containing the polyether polyamide (A2), its rate of tensile elongation at break is preferably 100% or more, more preferably 200% or more, still more preferably 250% or more, and yet still more preferably 300% or more. Specifically, the rate of tensile elongation at break is measured by a method described in the Examples.

In addition, on the occasion of holding the polyether polyamide fiber containing the polyether polyamide (A1) of the present invention at 23°C and 80% RH, its coefficient of saturated moisture absorption is preferably 5% or less, more preferably 3% or less, and still more preferably less than 2%, and it is preferable that the coefficient of saturated moisture absorption is lower. When the coefficient of saturated moisture absorption is lower, the absorption amount of water is smaller, and the physical properties of the polyether polyamide fiber become more stable.

In the case where the polyether polyamide fiber containing the polyether polyamide (A2) of the present invention is normalized such that when held at 23°C and 80% RH, its coefficient of saturated moisture absorption is defined as 100%, a normalized coefficient of moisture absorption after holding in an environment at 23°C and 80% RH until a coefficient of moisture absorption reaches a saturated state and then further holding in an environment at 23°C and 50% RH for 60 minutes is preferably from 1 to 50%, more preferably from 1 to 45%, and still more preferably from 1 to 20%. It is meant that the lower the normalized coefficient of moisture absorption after 60 minutes, the larger the release amount of water and the higher the moisture release rate. When the normalized coefficient of moisture absorption after 60 minutes falls within the foregoing numerical value range, the moisture release rate is high, and hence, such is preferable.

In addition, on the occasion of holding the polyether polyamide fiber containing the polyether polyamide (A2)

of the present invention at 23°C and 80% RH, its coefficient of saturated moisture absorption is preferably 2% or more, more preferably 3% or more, and still more preferably 4% or more. It is meant that the higher the coefficient of saturated moisture absorption, the larger the absorption amount of water and the higher the moisture absorption rate. When the coefficient of saturated moisture absorption is 2% or more, the moisture absorption rate is high, and hence, such is preferable. An upper limit of the coefficient of saturated moisture absorption is not particularly limited, and it is preferable that the coefficient of saturated moisture absorption is higher; however, the upper limit of the coefficient of saturated moisture absorption is, for example, 50% or less, and it is sufficiently 10% or less. Here, the coefficient of saturated moisture absorption is measured by a method described in the Examples.

[Product composed of polyether polyamide fiber]

The present invention also provides a knitted fabric, a woven fabric, a nonwoven fabric, or a staple composed of the polyether polyamide fiber of the present invention. Since the polyether polyamide fiber of the present invention has a good balance between the strength and the flexibility, it can be used in extremely wide fields including intermediate garments such as an inner garment, an undergarment, a lining, etc., outer garments such as a shirt, a blouse, a sportswear, slacks, etc., bedclothes such as a bed sheet, a quilt cover, etc., and the like.

EXAMPLES

The present invention is hereunder described in more detail by reference to the Examples, but it should not be construed that the present invention is limited thereto. Incidentally, in the present Examples, various measurements were performed by the following methods.

1) Relative viscosity ($\eta r$)

0.2 g of a sample was accurately weighed and dissolved in 20 mL of 96% sulfuric acid at from 20 to 30°C with stirring. After completely dissolving, 5 mL of the solution was rapidly taken into a Cannon-Fenske viscometer, allowed to stand in a thermostat at 25°C for 10 minutes, and then measured for a fall time (t). In addition, a fall time ($t_0$) of the 96% sulfuric acid itself was similarly measured. A relative viscosity was calculated from t and to according to the following equation.

$$\text{Relative viscosity} = t/t_0$$

2) Number average molecular weight (Mn)

First of all, a sample was dissolved in a phenol/ethanol mixed solvent and a benzyl alcohol solvent, respectively, and a terminal carboxyl group concentration and a terminal amino group concentration were determined by means of neutralization titration in hydrochloric acid and a sodium hydroxide aqueous solution, respectively. A number average molecular weight was determined from quantitative values of the terminal amino group concentration and the terminal carboxyl group concentration according to the following equation.

$$\text{Number average molecular weight} = 2 \times 1{,}000{,}000/([NH_2] + [COOH])$$

$[NH_2]$: Terminal amino group concentration (μeq/g)
[COOH]: Terminal carboxyl group concentration (μeq/g)

3) Differential scanning calorimetry (glass transition temperature, crystallization temperature, and melting point)

The differential scanning calorimetry was performed in conformity with JIS K7121 and K7122. By using a differential scanning calorimeter (a trade name: DSC-60, manufactured by Shimadzu Corporation), each sample was charged in a DSC measurement pan and subjected to a pre-treatment of raising the temperature to 300°C in a nitrogen atmosphere at a temperature rise rate of 10°C/min and rapid cooling, followed by performing the measurement. As for the measurement condition, the temperature was raised at a rate of 10°C/min, and after keeping at 300°C for 5 minutes, the temperature was dropped to 100°C at a rate of -5°C/min, thereby measuring a glass transition temperature Tg, a crystallization temperature Tch, and a melting point Tm.

4) Tensile test (tensile elastic modulus and rate of tensile elongation at break):

The tensile elastic modulus and the rate of tensile elongation at break were measured in conformity with JIS K7161. A measurement sample (a material constituting a polyether polyamide fiber or polyamide fiber) was processed into a film having a thickness of 100 μm and cut out into a size of 10 mm × 100 mm, thereby forming a test piece. The tensile test was carried out using a tensile tester (strograph, manufactured by Toyo Seiki Seisaku-sho, Ltd.) under conditions at a measurement temperature of 23°C and a humidity of 50% RH and at a tensile rate of 50 mm/min in a chuck-to-chuck distance of 50 mm, thereby determining a tensile elastic modulus and a rate of tensile elongation at break.

5) Fineness

A mass (g) of the resulting fiber in a length of 100 m was measured, and this was converted into a mass A (g/km) of the fiber per 1 km in length, thereby determining a fineness (dtex) according to the following equation. Incidentally, an average value at n = 3 was defined as a value of the fineness of each of the present Examples and Comparative Examples.

$$\text{Fineness (dtex)} = 10 \times \text{A (g/km)}$$

6) Sulfur atom concentration

Sebacic acid used in each of the Examples was subjected to tablet molding with a press machine, followed by carrying out a fluorescent X-ray analysis (XRF). A fluorescent X-ray analyzer (a trade name: ZSX Primus, manufactured by Rigaku Corporation) was used, and an Rh vacuum tube (4 kW) was used as a vacuum tube. A polypropylene film was used as a film for analyzer window, and EZ scanning was carried out in an irradiation region of 30 mmϕ in a vacuum atmosphere.

7) Evaluation of optical physical properties (YI)

The YI value was measured in conformity with JIS K7105. A pellet composed of a polyether polyamide or a polyamide was fabricated, and this was used as a measurement sample. A haze measuring apparatus (Model: COH-300A, manufactured by Nippon Denshoku Industries Co., Ltd.) was used as a measuring apparatus.

8) Moisture absorbing and releasing properties

(Coefficient of moisture absorption and coefficient of saturated moisture absorption)

A measurement sample (a material constituting a polyether polyamide fiber or polyamide fiber) was processed into a film having a thickness of 100 μm and processed in a shape of 50 mm × 50 mm, and quickly thereafter, a film mass was measured and defined as a mass in an absolute dry state. Subsequently, the resulting sample was stored in an environment at 23°C and 80% RH for 3 days to saturate water, and a coefficient of saturated moisture absorption was determined. Subsequently, the above-described sample was allowed to stand in an environment at 23°C and 50% RH, and a mass of the sample after elapsing a certain period of time (after 5 minutes, after 10 minutes, after 20 minutes, after 40 minutes, and after 60 minutes, respectively) was measured, thereby determining a change in the mass. From the results of this measurement, a coefficient of moisture absorption at 23°C and 50% RH was calculated according to the following equation.

$$\text{Coefficient of moisture absorption (\%)} = [\{(\text{Mass after elapsing a prescribed period of time at 23°C and 50\% RH}) - (\text{Mass at the time of absolute drying})\}/(\text{Mass at the time of absolute drying})] \times 100$$

(Normalized coefficient of moisture absorption)

Furthermore, when allowed to stand for a prescribed period of time under a condition at 23°C and 50% RH, a value of a coefficient of moisture absorption was normalized according to the following equation while defining a coefficient

of saturated moisture absorption at 23°C and 80% RH (namely, a coefficient of moisture absorption at an elapsing time of 0 minute) as 100%.

$$\text{Normalized coefficient of moisture absorption (\%)} = [(\text{Coefficient of water absorption after elapsing a prescribed period of time at 23°C and 50\% RH})/(\text{Coefficient of moisture absorption at an elapsing time of 0 minute})] \times 100$$

Production Example 1-1 (Production of polyether polyamide A1-1)

In a reaction vessel having a capacity of about 3 L and equipped with a stirrer, a nitrogen gas inlet, and a condensed water discharge port, 584.60 g of adipic acid, 0.6832 g of sodium hypophosphite monohydrate, and 0.4759 g of sodium acetate were charged, and after thoroughly purging the inside of the vessel with nitrogen, the mixture was melted at 170°C while feeding a nitrogen gas at a rate of 20 mL/min. A mixed liquid of 490.32 g of m-xylylenediamine (MXDA) (manufactured by Mitsubishi Gas Chemical Company, Inc.) and 400.00 g of a polyether diamine (a trade name: XTJ-542, manufactured by Huntsman Corporation, USA; according to the catalog of Huntsman Corporation, USA, this compound is represented by the foregoing general formula (1), wherein an approximate figure of (x1 + z1) is 6.0, and an approximate figure of y1 is 9.0, and has a number average molecular weight of 1,000) was added dropwise thereto while gradually raising the temperature to 260°C, and the mixture was polymerized for about 2 hours to obtain a polyether polyamide resin A1-1. $\eta r$ = 1.38, [COOH] = 110.17 μeq/g, $[NH_2]$ = 59.57 μeq/g, Mn = 11,783, Tg = 71.7°C, Tch = 108.3°C, Tm = 232.8°C

Production Example 1-2 (Production of polyether polyamide A1-2)

In a reaction vessel having a capacity of about 3 L and equipped with a stirrer, a nitrogen gas inlet, and a condensed water discharge port, 555.37 g of adipic acid, 0.6490 g of sodium hypophosphite monohydrate, and 0.4521 g of sodium acetate were charged, and after thoroughly purging the inside of the vessel with nitrogen, the mixture was melted at 170°C while feeding a nitrogen gas at a rate of 20 mL/min. A mixed liquid of 326.06 g of m-xylylenediamine (MXDA) (manufactured by Mitsubishi Gas Chemical Company, Inc.) and 139.74 g of p-xylylenediamine (PXDA) (manufactured by Mitsubishi Gas Chemical Company, Inc.) (molar ratio (MXDA/PXDA = 70/30)) and 380.00 g of a polyether diamine (a trade name: XTJ-542, manufactured by Huntsman Corporation, USA) was added dropwise thereto while gradually raising the temperature to 270°C, and the mixture was polymerized for about 2 hours to obtain a polyether polyamide A1-2. $\eta r$ = 1.36, [COOH] = 64.82 μeq/g, $[NH_2]$ = 100.70 μeq/g, Mn = 12,083, Tg = 79.3°C, Tch = 107.1°C, Tm = 251.4°C

Production Example 1-3 (Production of polyether polyamide A1-3)

In a reaction vessel having a capacity of about 3 L and equipped with a stirrer, a nitrogen gas inlet, and a condensed water discharge port, 667.4 g of sebacic acid, 0.6587 g of sodium hypophosphite monohydrate, and 0.4588 g of sodium acetate were charged, and after thoroughly purging the inside of the vessel with nitrogen, the mixture was melted at 170°C while feeding a nitrogen gas at a rate of 20 mL/min. A mixed liquid of 404.51 g of m-xylylenediamine (MXDA) (manufactured by Mitsubishi Gas Chemical Company, Inc.) and 330.00 g of a polyether diamine (a trade name: XTJ-542, manufactured by Huntsman Corporation, USA) was added dropwise thereto while gradually raising the temperature to 260°C, and the mixture was polymerized for about 2 hours to obtain a polyether polyamide A1-3. $\eta r$ = 1.29, [COOH] = 100.8 μeq/g, $[NH_2]$ = 38.4 μeq/g, Mn = 14,368, Tg = 29.2°C, Tch = 58.0°C, Tm = 185.0°C

Production Example 1-4 (Production of polyether polyamide A1-4)

In a reaction vessel having a capacity of about 3 L and equipped with a stirrer, a nitrogen gas inlet, and a condensed water discharge port, 667.43 g of sebacic acid, 0.6587 g of sodium hypophosphite monohydrate, and 0.4588 g of sodium acetate were charged, and after thoroughly purging the inside of the vessel with nitrogen, the mixture was melted at 170°C while feeding a nitrogen gas at a rate of 20 mL/min. A mixed liquid of 283.16 g of m-xylylenediamine (MXDA) (manufactured by Mitsubishi Gas Chemical Company, Inc.) and 121.35 g of p-xylylenediamine (PXDA) (manufactured by Mitsubishi Gas Chemical Company, Inc.) (molar ratio (MXDA/PXDA = 70/30)) and 330.00 g of a polyether diamine (a trade name: XTJ-542, manufactured by Huntsman Corporation, USA) was added dropwise thereto while gradually raising the temperature to 260°C, and the mixture was polymerized for about 2 hours to obtain a polyether polyamide A1-4. $\eta r$ =1.31, [COOH] = 81.62 μeq/g, $[NH_2]$ = 68.95 μeq/g, Mn = 13,283, Tg = 12.9°C, Tch = 69.5°C, Tm

= 204.5°C

Comparative Production Example 1-1 (Production of polyamide 1-1)

In a reaction vessel having a capacity of about 3 L and equipped with a stirrer, a nitrogen gas inlet, and a condensed water discharge port, 584.5 g of adipic acid, 0.6210 g of sodium hypophosphite monohydrate, and 0.4325 g of sodium acetate were charged, and after thoroughly purging the inside of the vessel with nitrogen, the mixture was melted at 170°C while feeding a nitrogen gas at a rate of 20 mL/min. 544.80 g of m-xylylenediamine (MXDA) (manufactured by Mitsubishi Gas Chemical Company, Inc.) was added dropwise thereto while gradually raising the temperature to 260°C, and the mixture was polymerized for about 2 hours to obtain a polyamide 1-1. ηr = 2.10, [COOH] = 104.30 μeq/g, $[NH_2]$ = 24.58 μeq/g, Mn = 15,500, Tg = 86.1 °C, Tch = 153.0°C, Tm = 239.8°C

Comparative Production Example 1-2 (Production of polyamide 1-2)

In a reaction vessel having a capacity of about 3 L and equipped with a stirrer, a nitrogen gas inlet, and a condensed water discharge port, 730.8 g of adipic acid, 0.6322 g of sodium hypophosphite monohydrate, and 0.4404 g of sodium acetate were charged, and after thoroughly purging the inside of the vessel with nitrogen, the mixture was melted at 170°C while feeding a nitrogen gas at a rate of 20 mL/min. A mixed liquid of 476.70 g of m-xylylenediamine (MXDA) (manufactured by Mitsubishi Gas Chemical Company, Inc.) and 204.30 g of p-xylylenediamine (PXDA) (manufactured by Mitsubishi Gas Chemical Company, Inc.) (molar ratio (MXDA/PXDA = 70/30)) was added dropwise thereto while gradually raising the temperature to 275°C, and the mixture was polymerized for about 2 hours to obtain a polyamide 1-2: ηr = 2.07, [COOH] = 55.70 μeq/g, $[NH_2]$ = 64.58 μeq/g, Mn = 16,623 Tg = 89.0°C, Tch = 135.0°C, Tm = 257.0°C.

Comparative Production Example 1-3 (Production of polyamide 1-3)

In a reaction vessel having a capacity of about 3 L and equipped with a stirrer, a nitrogen gas inlet, and a condensed water discharge port, 809.0 g of sebacic acid (sulfur atom concentration: 0 ppm), 0.6210 g of sodium hypophosphite monohydrate, and 0.4325 g of sodium acetate were charged, and after thoroughly purging the inside of the vessel with nitrogen, the mixture was melted at 170°C while feeding a nitrogen gas at a rate of 20 mL/min. 544.80 g of m-xylylenediamine (MXDA) (manufactured by Mitsubishi Gas Chemical Company, Inc.) was added dropwise thereto while gradually raising the temperature to 260°C, and the mixture was polymerized for about 2 hours to obtain a polyamide 1-3: ηr = 1.80, [COOH] = 88.5 μeq/g, $[NH_2]$ = 26.7 μeq/g, Mn = 17,300, Tg = 61.2°C, Tch = 114.1°C, Tm = 191.5°C.

Comparative Production Example 1-4 (Production of polyamide 1-4)

The polymerization was performed in the same manner as that in Comparative Production Example 1-3, except for using sebacic acid having a sulfur atom concentration of 70 ppm, thereby obtaining a polyamide 1-4. ηr = 1.80. [COOH] = 88.5 μeq/g, $[NH_2]$ = 26.7 μeq/g, Mn = 17,300, Tg = 61.2°C, Tch = 114.1°C, Tm = 191.5°C

Comparative Production Example 1-5 (Production of polyamide 1-5)

In a reaction vessel having a capacity of about 3 L and equipped with a stirrer, a nitrogen gas inlet, and a condensed water discharge port, 829.2 g of sebacic acid, 0.6365 g of sodium hypophosphite monohydrate, and 0.4434 g of sodium acetate were charged, and after thoroughly purging the inside of the vessel with nitrogen, the mixture was melted at 170°C while feeding a nitrogen gas at a rate of 20 mL/min. A mixed liquid of 390.89 g of m-xylylenediamine (MXDA) (manufactured by Mitsubishi Gas Chemical Company, Inc.) and 167.53 g of p-xylylenediamine (PXDA) (manufactured by Mitsubishi Gas Chemical Company, Inc.) (molar ratio (MXDA/PXDA = 70/30)) was added dropwise thereto while gradually raising the temperature to 260°C, and the mixture was polymerized for about 2 hours to obtain a polyamide 1-5. ηr = 2.20, [COOH] = 81.8 μeq/g, $[NH_2]$ = 26.9 μeq/g, Mn = 18,400, Tg = 65.9°C, Tch = 100.1°C, Tm = 213.8°C

Example 1-1

A material in which 0.02 parts by mass of sodium montanate (a trade name: HOSTAMONT NaV 101, manufactured by Clariant Japan K.K.) was added to 100 parts by mass of the polyether polyamide A1-1 obtained in Production Example 1-1 was melted by using a single-screw extruder. The resulting composition was spun out at a spinning temperature of 255°C through a spinneret, taken off into a water bath at a temperature of 80°C under a condition at a draft ratio of 2.6 and an air gap of 10 mm, and then continuously stretched without being once wound up. The stretching was carried out in two stages for stretching and one stage for heat fixing; as for the stretching means, a dry hot air bath at a

temperature of 145°C was used in a first-stage stretching region, a dry hot air bath at a temperature of 185°C was used in a second-stage stretching region, and a dry hot air bath at a temperature of 200°C was used in a heat fixing region; and as for the stretching condition, a stretch ratio of a first process (first stage) was set up to 5.0 times, a stretch ratio of a second process (second stage) was set up to 1.4 times, a relaxation ratio was set up to 10%, and a production rate was set up to 77 m/min, thereby obtaining a monofilament having a fineness of 1,500 dtex.

The polyether polyamide A1-1 and the resulting polyether polyamide fiber were used and subjected to the above-described evaluations. Results are shown in Table 1.

Example 1-2

A composition in which 0.2 parts by mass of, as a molecular chain extender, an aliphatic polycarbodiimide compound (B1) (a trade name: CARBODILITE LA-1, manufactured by Nisshinbo Holdings Inc.) was blended in 100 parts by mass of the polyether polyamide A1-2 obtained in Production Example 1-2 was melted by using a single-screw extruder. The resulting composition was spun out at a spinning temperature of 280°C through a spinneret, taken off into air at a temperature of 20°C, and then continuously stretched without being once wound up. The stretching was carried out in three stages for stretching and one stage for heat fixing; and as for the stretching means, a dry hot air bath at a temperature of 65°C was used in each of the first to third stages, and a dry hot air bath at a temperature of 200°C was used in a heat fixing region, thereby obtaining a multifilament having a fineness of 200 dtex and the number of filaments of 34.

The polyether polyamide composition and the resulting polyether polyamide fiber were used and subjected to the above-described evaluations. Results are shown in Table 1.

Example 1-3

A multifilament was produced in the same manner as that in Example 1-2. except that the polyether polyamide A1-3 obtained in Production Example 1-3 was used in place of the polyether polyamide A1-2 obtained in Production Example 1-2, a composition in which 0.2 parts by mass of, as a molecular chain extender, an epoxy group-containing compound (B2) (JONCRYL ADR-4368: a trade name for an epoxy group-containing (meth)acrylic polymer, weight average molecular weight: 6,800, epoxy equivalent: 285 g/eq., manufactured by BASF SE) was blended in 100 parts by mass of the polyether polyamide A1-3 was melted by using a single-screw extruder, and the spinning temperature was set up to 210°C.

The polyether polyamide composition and the resulting polyether polyamide fiber were used and subjected to the above-described evaluations. Results are shown in Table 1.

Example 1-4

A multifilament was produced in the same manner as that in Example 1-2, except that the polyether polyamide 41-4 obtained in Production Example 1-4 was used in place of the polyether polyamide A1-2 obtained in Production Example 1-2, and the spinning temperature was set up to 230°C.

The polyether polyamide composition and the resulting polyether polyamide fiber were used and subjected to the above-described evaluations. Results are shown in Table 1.

Example 1-5

A multifilament was produced in the same manner as that in Example 1-3, except that in Example 1-3, the molecular chain extender was not used.

The polyether polyamide A1-3 and the resulting polyether polyamide fiber were used and subjected to the above-described evaluations. Results are shown in Table 1.

Example 1-6

A multifilament was produced in the same manner as that in Example 1-4, except that in Example 1-4, the molecular chain extender was not used.

The polyether polyamide A1-4 and the resulting polyether polyamide fiber were used and subjected to the above-described evaluations. Results are shown in Table 1.

Example 1-7

The polyether polyamide A1-2 obtained in Production Example 1-2 was melted by using a single-screw extruder, and a polyester was used as a thermoplastic resin (C) and melted by using a separate single-screw extruder. The molten polyether polyamide A1-2 and the molten polyester were joined in a spinneret at 270°C and extruded, and thereafter, the resultant was taken off into air at a temperature or 20°C and then continuously stretched without being once wound up. The stretching was carried out in three stages for stretching and one stage for heat fixing; and as for the stretching means, a dry hot air bath at a temperature of 65°C was used in each of the first to third stages, and a dry hot air bath at a temperature of 200°C was used in a heat fixing region, thereby obtaining a multifilament having a fineness of 200 dtex and the number of filaments of 34. The resulting filament had a peculiar texture.

Comparative Example 1-1

A polyamide fiber was produced in the same method as that in Example 1-1, except that the polyamide 1-1 obtained in Comparative Production Example 1-1 was used in place of the polyether polyamide A1-1 obtained in Production Example 1-1.
The polyamide 1-1 and the resulting polyamide fiber were used and subjected to the above-described evaluations. Results are shown in Table 1.

Comparative Example 1-2

A polyamide fiber was produced in the same method as that in Example 1-2, except that in Example 1-2, the polyamide 1-2 obtained in Comparative Production Example 1-2 was used in place of the polyether polyamide A1-2 obtained in Production Example 1-2.
The polyamide composition and the resulting polyamide fiber were used and subjected to the above-described evaluations. Results are shown in Table 1.

Comparative Example 1-3

A polyamide fiber was produced in the same method as that in Example 1-3, except that in Example 1-3, the polyamide 1-3 obtained in Comparative Production Example 1-3 was used in place of the polyether polyamide A1-3 obtained in Production Example 1-3.
The polyamide composition and the resulting polyamide fiber were used and subjected to the above-described evaluations. Results are shown in Table 1.

Comparative Example 1-4

A polyamide fiber was produced in the same method as that in Example 1-5, except that in Example 1-5, the polyamide 1-4 obtained in Comparative Production Example 1-4 was used in place of the polyether polyamide A1-3 obtained in Production Example 1-3.
The polyamide 1-4 and the resulting polyamide fiber were used and subjected to the above-described evaluations. Results are shown in Table 1.

Comparative Example 1-5

A polyamide fiber was produced in the same method as that in Example 1-6, except that in Example 1-6, the polyamide 1-5 obtained in Comparative Production Example 1-5 was used in place of the polyether polyamide A1-4 obtained in Production Example 1-4.
The polyamide 1-5 and the resulting polyamide fiber were used and subjected to the above-described evaluations. Results are shown in Table 1.

Table 1

| | | | | Examples | | | | | | Comparative Examples | | | | |
|---|---|---|---|---|---|---|---|---|---|---|---|---|---|---|
| | | | | 1-1 | 1-2 | 1-3 | 1-4 | 1-5 | 1-6 | 1-1 | 1-2 | 1-3 | 1-4 | 1-5 |
| Composition of polyether polyamide (A1) (molar ratio) | Diamine component (molar ratio) | (a1-1) | XTJ-542 | 10 | 10 | 10 | 10 | 10 | 10 | - | - | - | - | - |
| | | (a-2) | Xylylenediamine | 90 | 90 | 90 | 90 | 90 | 90 | 100 | 100 | 100 | 100 | 100 |
| | | (MXDA/PXDA molar ratio) | | (100/0) | (70/30) | (100/0) | (70/30) | (100/0) | (70/30) | (100/0) | (70/30) | (100/0) | (100/0) | (70/30) |
| | Dicarboxylic acid Component | Adipic acid (molar ratio) | | 100 | 100 | - | - | - | - | 100 | 100 | - | - | - |
| | | Sebacic acid (molar ratio) | | - | - | 100 | 100 | 100 | 100 | - | - | 100 | 100 | 100 |
| | | Sulfur atom concentration (ppm) | | - | - | 70 | 0 | 70 | 0 | - | - | 0 | 70 | 0 |
| Molecular chain extender (B) (parts by mass)*1 | (B1) CARBODILITE LA-1*2 | | | - | 0.2 | - | 0.2 | - | - | - | 0.2 | - | - | - |
| | (B2) JONCRYLADR-4368 *3 | | | - | - | 0.2 | - | - | - | - | - | 0.2 | - | - |
| Physical properties of polyether polyamide (A1) | Glass transition temperature (°C) | | | 71.7 | 79.3 | 29.2 | 12.9 | 29.2 | 12.9 | 86.1 | 89.0 | 61.2 | 61.2 | 65.9 |
| | Melting point (°C) | | | 232.8 | 251.4 | 185.0 | 204.5 | 185.0 | 204.5 | 239.8 | 257.0 | 191.5 | 191.5 | 213.8 |
| | Relative viscosity | | | 1.38 | 1.36 | 1.29 | 1.31 | 1.29 | 1.31 | 2.10 | 2.07 | 1.80 | 1.80 | 2.20 |
| | Sulfur atom concentration (ppm) | | | - | - | 34 | 0 | 34 | 0 | - | - | 0 | 35 | 0 |
| | YI value | | | 2 | 2 | -2 | 3 | -3 | 2 | 2 | 3 | 2 | -2 | 2 |
| Shape and physical properties of polyether polyamide fiber | Number of filaments | | | 1 | 34 | 34 | 34 | 34 | 34 | 1 | 34 | 34 | 34 | 34 |
| | Fineness (dtex) | | | 1500 | 200 | 200 | 200 | 200 | 200 | 1500 | 200 | 200 | 200 | 200 |
| | Rate of tensile elongation at break (%) *4 | | | 429 | 480 | 440 | 405 | 403 | 359 | 2.9 | 2.8 | 90 | 45 | 3.4 |
| | Tensile elastic modulus (MPa)*4 | | | 1026 | 1027 | 630 | 702 | 633 | 700 | 3100 | 3100 | 1750 | 1700 | 2030 |

*1: Blending amount based on 100 parts by mass of the polyether polyamide (A1) (parts by mass)
*2: A trade name for an aliphatic polycarbodiimide compound, manufactured by Nisshinbo Holdings Inc.
*3: A trade name for an epoxy group-containing (meth)acrylic polymer, manufactured by BASF SE
*4: A value evaluated by processing a material constituting the fiber into a film shape

From the results of Table 1, it is noted that the polyether polyamide fiber of the present invention is a material having high strength and high elastic modulus and also having excellent flexibility.

Production Example 2-1 (Production of polyether polyamide A2-1)

In a reaction vessel having a capacity of about 3 L and equipped with a stirrer, a nitrogen gas inlet, and a condensed water discharge port, 584.60 g of adipic acid, 0.6613 g of sodium hypophosphite monohydrate, and 0.4606 g of sodium acetate were charged, and after thoroughly purging the inside of the vessel with nitrogen, the mixture was melted at 170°C while feeding a nitrogen gas at a rate of 20 mL/min. A mixed liquid of 489.34 g of m-xylylenediamine (MXDA) (manufactured by Mitsubishi Gas Chemical Company, Inc.) and 359.28 g of a polyether diamine (a trade name: ED-900, manufactured by Huntsman Corporation, USA; according to the catalog of Huntsman Corporation, USA, this compound is represented by the foregoing general formula (2), wherein an approximate figure of (x2 + z2) is 6.0, and an approximate figure of y2 is 12.5, and has a number average molecular weight of 900) was added dropwise thereto while gradually raising the temperature to 260°C, and the mixture was polymerized for about 2 hours to obtain a polyether polyamide A2-1. $\eta r$ = 1.35, [COOH] = 73.24 $\mu$eq/g, [$NH_2$] = 45.92 $\mu$eq/g, Mn = 16,784, Tg = 42.1°C, Tch = 89.7°C. Tm = 227.5°C

Production Example 2-2 (Production of polyether polyamide A2-2)

In a reaction vessel having a capacity of about 3 L and equipped with a stirrer, a nitrogen gas inlet, and a condensed water discharge port, 584.60 g of adipic acid, 0.6626 g of sodium hypophosphite monohydrate, and 0.4616 g of sodium acetate were charged, and after thoroughly purging the inside of the vessel with nitrogen, the mixture was melted at 170°C while feeding a nitrogen gas at a rate of 20 mL/min. A mixed liquid of 343.22 g of m-xylylenediamine (MXDA) (manufactured by Mitsubishi Gas Chemical Company, Inc.) and 147.10 g of p-xylylenediamine (PXDA) (manufactured by Mitsubishi Gas Chemical Company, Inc.) (molar ratio (MXDA/PXDA= 70/30)) and 360.00 g of a polyether diamine (a trade name: ED-900, available from Huntsman Corporation, USA) was added dropwise thereto while gradually raising the temperature to 260°C, and the mixture was polymerized for about 2 hours to obtain a polyether polyamide A2-2. $\eta r$ = 1.34, [COOH] = 75.95 $\mu$eq/g, [$NH_2$] = 61.83 $\mu$eq/g, Mn = 14,516, Tg = 33.2°C, Tch = 73.9°C, Tm = 246.2°C

Production Example 2-3 (Production of polyether polyamide A2-3)

In a reaction vessel having a capacity of about 3 L and equipped with a stirrer, a nitrogen gas inlet, and a condensed water discharge port, 687.65 g of sebacic acid, 0.6612 g of sodium hypophosphite monohydrate, and 0.4605 g of sodium acetate were charged, and after thoroughly purging the inside of the vessel with nitrogen, the mixture was melted at 170°C while feeding a nitrogen gas at a rate of 20 mL/min. A mixed liquid of 416.77 g of m-xylylenediamine (MXDA) (manufactured by Mitsubishi Gas Chemical Company, Inc.) and 306.00 g of a polyether diamine (a trade name: ED-900, manufactured by Huntsman Corporation, USA) was added dropwise thereto while gradually raising the temperature to 260°C, and the mixture was polymerized for about 2 hours to obtain a polyether polyamide A2-3. $\eta r$ = 1.33, [COOH] = = 96.88 $\mu$eq/g, [$NH_2$] = 37.00 $\mu$eq/g, Mn = 14,939, Tg = 22.2°C, Tch = 43.0°C, Tm = 182.8°C

Production Example 2-4 (Production of polyether polyamide A2-4)

In a reaction vessel having a capacity of about 3 L and equipped with a stirrer, a nitrogen gas inlet, and a condensed water discharge port, 687.65 g of sebacic acid, 0.6612 g of sodium hypophosphite monohydrate, and 0.4605 g of sodium acetate were charged, and after thoroughly purging the inside of the vessel with nitrogen, the mixture was melted at 170°C while feeding a nitrogen gas at a rate of 20 mL/min. A mixed liquid of 291.74 g of m-xylylenediamine (MXDA) (manufactured by Mitsubishi Gas Chemical Company, Inc.) and 125.03 g of p-xylylenediamine (PXDA) (manufactured by Mitsubishi Gas Chemical Company, Inc.) (molar ratio (MXDA/PXDA = 70/30)) and 306.00 g of a polyether diamine (a trade name: ED-900, manufactured by Huntsman Corporation, USA) was added dropwise thereto while gradually raising the temperature to 260°C, and the mixture was polymerized for about 2 hours to obtain a polyether polyamide A2-4. $\eta r$ = 1.36, [COOH] = 66.35 $\mu$eq/g, [$NH_2$] = 74.13 $\mu$eq/g, Mn = 14,237, Tg = 16.9°C, Tch = 52.9°C, Tm = 201.9°C

Comparative Production Example 2-1 (Production of polyamide 2-1)

In a reaction vessel having a capacity of about 3 L and equipped with a stirrer, a nitrogen gas inlet, and a condensed water discharge port, 584.5 g of adipic acid, 0.6210 g of sodium hypophosphite monohydrate, and 0.4325 g of sodium acetate were charged, and after thoroughly purging the inside of the vessel with nitrogen, the mixture was

melted at 170°C while feeding a nitrogen gas at a rate of 20 mL/min. 544.80 g of m-xylylenediamine (MXDA) (manufactured by Mitsubishi Gas Chemical Company, Inc.) was added dropwise thereto while gradually raising the temperature to 260°C, and the mixture was polymerized for about 2 hours to obtain a polyamide 2-1. ηr = 2.10, [COOH] = 104.30 μeq/g, $[NH_2]$ = 24.58 μeq/g, Mn = 15,500, Tg = 86.1°C, Tch = 153.0°C, Tm = 239.8°C

Comparative Production Example 2-2 (Production of polyamide 2-2)

In a reaction vessel having a capacity of about 3 L and equipped with a stirrer, a nitrogen gas inlet, and a condensed water discharge port, 730.8 g of adipic acid, 0.6322 g of sodium hypophosphite monohydrate, and 0.4404 g of sodium acetate were charged, and after thoroughly purging the inside of the vessel with nitrogen, the mixture was melted at 170°C while feeding a nitrogen gas at a rate of 20 mL/min. A mixed liquid of 476.70 g of m-xylylenediamine (MXDA) (manufactured by Mitsubishi Gas Chemical Company, Inc.) and 204.30 g of p-xylylenediamine (PXDA) (manufactured by Mitsubishi Gas Chemical Company, Inc.) (molar ratio (MXDA/PXDA = 70/30)) was added dropwise thereto while gradually raising the temperature to 275°C, and the mixture was polymerized for about 2 hours to obtain a polyamide 2-2. ηr = 2.07, [COOH] = 55.70 μeq/g, $[NH_2]$ = 64.58 μeq/g, Mn = 16,623, Tg = 89.0°C, Tch = 135.0°C, Tm = 257.0°C

Comparative Production Example 2-3 (Production of polyamide 2-3)

In a reaction vessel having a capacity of about 3 L and equipped with a stirrer, a nitrogen gas inlet, and a condensed water discharge port, 809.0 g of sebacic acid (sulfur atom concentration: 0 ppm), 0.6210 g of sodium hypophosphite monohydrate, and 0.4325 g of sodium acetate were charged, and after thoroughly purging the inside of the vessel with nitrogen, the mixture was melted at 170°C while feeding a nitrogen gas at a rate of 20 mL/min. 544.80 g of m-xylylenediamine (MXDA) (manufactured by Mitsubishi Gas Chemical Company, Inc.) was added dropwise thereto while gradually raising the temperature to 260°C, and the mixture was polymerized for about 2 hours to obtain a polyamide 2-3. ηr = 1.80, [COOH] = 88.5 μeq/g, $[NH_2]$ = 26.7 μeq/g, Mn = 17,300, Tg = 61.2°C, Tch = 114.1 °C, Tm = 191.5°C

Comparative Production Example 2-4 (Production of polyamide 2-4)

The polymerization was performed in the same manner as that in Comparative Production Example 2-3, except for using sebacic acid having a sulfur atom concentration of 70 ppm, thereby obtaining a polyamide 2-4. ηr = 1.80, [COOH] = 88.5 μeq/g, $[NH_2]$ = 26.7 μeq/g, Mn = 17,300, Tg = 61.2°C, Tch = 114.1°C, Tm = 191.5°C

Comparative Production Example 2-5 (Production of polyamide 2-5)

In a reaction vessel having a capacity of about 3 L and equipped with a stirrer, a nitrogen gas inlet, and a condensed water discharge port, 829.2 g of sebacic acid, 0.6365 g of sodium hypophosphite monohydrate, and 0.4434 g of sodium acetate were charged, and after thoroughly purging the inside of the vessel with nitrogen, the mixture was melted at 170°C while feeding a nitrogen gas at a rate of 20 mL/min. A mixed liquid of 390.89 g of m-xylylenediamine (MXDA) (manufactured by Mitsubishi Gas Chemical Company, Inc.) and 167.53 g of p-xylylenediamine (PXDA) (manufactured by Mitsubishi Gas Chemical Company, Inc.) (molar ratio (MXDA/PXDA = 70/30)) was added dropwise thereto while gradually raising the temperature to 260°C, and the mixture was polymerized for about 2 hours to obtain a polyamide 2-5. ηr = 2.20, [COOH] = 81.8 μeq/g, $[NH_2]$ = 26.9 μeq/g, Mn = 18,400, Tg = 65.9°C, Tch = 100.1 °C, Tm = 213.8°C

Example 2-1

A composition in which 0.02 parts by mass of sodium montanate (a trade name: HOSTAMONT NaV 101, manufactured by Clariant Japan K.K.) was blended in 100 parts by mass of the polyether polyamide A2-1 obtained in Production Example 2-1 was melted by using a single-screw extruder. The resulting composition was spun out at a spinning temperature of 250°C through a spinneret, taken off into a water bath at a temperature of 80°C under a condition at a draft ratio of 2.6 and an air gap of 10 mm, and then continuously stretched without being once wound up. The stretching was carried out in two stages for stretching and one stage for heat fixing; as for the stretching means, a dry hot air bath at a temperature of 145°C was used in a first-stage stretching region, a dry hot air bath at a temperature of 185°C was used in a second-stage stretching region, and a dry hot air bath at a temperature of 200°C was used in a heat fixing region; and as for the stretching condition, a stretch ratio of a first process (first stage) was set up to 5.0 times, a stretch ratio of a second process (second stage) was set up to 1.4 times, a relaxation ratio was set up to 10%, and a production rate was set up to 77 m/min, thereby obtaining a monofilament having a fineness of 1,500 dtex.

The polyether polyamide A2-1 and the resulting polyether polyamide fiber were used and subjected to the above-described evaluations. Results are shown in Table 2.

Example 2-2

A composition in which 0.2 parts by mass of, as a molecular chain extender, an aliphatic polycarbodiimide compound (B1) (a trade name: CARBODILITE LA-1, manufactured by Nisshinbo Holdings Inc.) was blended in 100 parts by mass of the polyether polyamide A2-2 obtained in Production Example 2-2 was melted by using a single-screw extruder. The resulting composition was spun out at a spinning temperature of 260°C through a spinneret, taken off into air at a temperature of 20°C, and then continuously stretched without being once wound up. The stretching was carried out in three stages for stretching and one stage for heat fixing; and as for the stretching means, a dry hot air bath at a temperature of 65°C was used in each of the first to third stages, and a dry hot air bath at a temperature of 200°C was used in a heat fixing region, thereby obtaining a multifilament having a fineness of 200 dtex and the number of filaments of 34.
The polyether polyamide composition and the resulting polyether polyamide fiber were used and subjected to the above-described evaluations. Results are shown in Table 2.

Example 2-3

A multifilament was produced in the same manner as that in Example 2-2, except that the polyether polyamide A2-3 obtained in Production Example 2-3 was used in place of the polyether polyamide A2-2 obtained in Production Example 2-2, a composition in which 0.2 parts by mass of, as a molecular chain extender, an epoxy group-containing compound (B2) (JONCRYLADR-4368: a trade name for an epoxy group-containing (meth)acrylic polymer, weight average molecular weight: 6,800, epoxy equivalent: 285 g/eq., manufactured by BASF SE) was blended in 100 parts by mass of the polyether polyamide A2-3 was melted by using a single-screw extruder, and the spinning temperature was set up to 210°C.
The polyether polyamide composition and the resulting polyether polyamide fiber were used and subjected to the above-described evaluations. Results are shown in Table 2.

Example 2-4

A multifilament was produced in the same manner as that in Example 2-2, except that the polyether polyamide A2-4 obtained in Production Example 2-4 was used in place of the polyether polyamide A2-2 obtained in Production Example 2-2, and the spinning temperature was set up to 220°C.
The polyether polyamide composition and the resulting polyether polyamide fiber were used and subjected to the above-described evaluations. Results are shown in Table 2.

Example 2-5

A multifilament was produced in the same manners as that in Example 2-3, except that in Example 2-3, the molecular chain extender was not used.
The polyether polyamide A2-3 and the resulting polyether polyamide fiber were used and subjected to the above-described evaluations. Results arc shown in Table 2.

Example 2-6

A multifilament was produced in the same manners as that in Example 2-4, except that in Example 2-4, the molecular chain extender was not used.
The polyether polyamide A2-4 and the resulting polyether polyamide fiber were used and subjected to the above-described evaluations. Results are shown in Table 2.

Example 2-7

The polyether polyamide A2-2 obtained in Production Example 2-2 was melted by using a single-screw extruder, and a polyester was used as a thermoplastic resin (C) and melted by using a separate single-screw extruder. The molten polyether polyamide A2-2 and the molten polyester were joined in a spinneret at 270°C and extruded, and thereafter, the resultant was taken off into air at a temperature of 20°C and then continuously stretched without being once wound up. The stretching was carried out in three stages for stretching and one stage for heat fixing; and as for the stretching means, a dry hot air bath at a temperature of 65°C was used in each of the first to third stages, and a dry hot air bath at a temperature of 200°C was used in a heat fixing region, thereby obtaining a multifilament having a fineness of 200 dtex and the number of filaments of 34. The resulting filament had a peculiar texture.

Comparative Example 2-1

A polyamide fiber was produced in the same method as that in Example 2-1, except that in Example 2-1, the polyamide 2-1 obtained in Comparative Production Example 2-1 was used in place of the polyether polyamide A2-1 obtained in Production Example 2-1.

The polyamide 2-1 and the resulting polyamide fiber were used and subjected to the above-described evaluations. Results are shown in Table 2.

Comparative Example 2-2

A polyamide fiber was produced in the same method as that in Example 2-2, except that in Example 2-2, the polyamide 2-2 obtained in Comparative Production Example 2-2 was used in place of the polyether polyamide A2-2 obtained in Production Example 2-2.

The polyamide composition and the resulting polyamide fiber were used and subjected to the above-described evaluations. Results are shown in Table 2.

Comparative Example 2-3

A polyamide fiber was produced in the same method as that in Example 2-3, except that in Example 2-3, the polyamide 2-3 obtained in Comparative Production Example 2-3 was used in place of the polyether polyamide A2-3 obtained in Production Example 2-3.

The polyamide composition and the resulting polyamide fiber were used and subjected to the above-described evaluations. Results are shown in Table 2.

Comparative Example 2-4

A polyamide fiber was produced in the same method as that in Example 2-5, except that in Example 2-5, the polyamide 2-4 obtained in Comparative Production Example 2-4 was used in place of the polyether polyamide A2-3 obtained in Production Example 2-3.

The polyamide 2-4 and the resulting polyamide fiber were used and subjected to the above-described evaluations. Results are shown in Table 2.

Comparative Example 2-5

A polyamide fiber was produced in the same method as that in Example 2-6, except that in Example 2-6, the polyamide 2-5 obtained in Comparative Production Example 2-5 was used in place of the polyether polyamide A2-4 obtained in Production Example 2-4.

The polyamide 2-5 and the resulting polyamide fiber were used and subjected to the above-described evaluations. Results are shown in Table 2.

Table 2

| | | | | Examples | | | | | | Comparative Examples | | | | |
|---|---|---|---|---|---|---|---|---|---|---|---|---|---|---|
| | | | | 2-1 | 2-2 | 2-3 | 2-4 | 2-5 | 2-6 | 2-1 | 2-2 | 2-3 | 2-4 | 2-5 |
| Composition of polyether polyamide (A2) (molar ratio) | Diamine component (molar ratio) | (a2-1) | ED-900 | 10 | 10 | 10 | 10 | 10 | 10 | - | - | - | - | - |
| | | (a-2) | Xylylenediamine | 90 | 90 | 90 | 90 | 90 | 90 | 100 | 100 | 100 | 100 | 100 |
| | | (MXDA/PXDA molar ratio) | | (100/0) | (70/30) | (100/0) | (70/30) | (100/0) | (70/30) | (100/0) | (70/30) | (10010) | (100/0) | (70/30) |
| | Dicarboxylic: acid Component | Adipic acid (molar ratio) | | 100 | 100 | | | - | - | 100 | 100 | - | - | - |
| | | Sebacic acid (molar ratio) | | - | - | 100 | 100 | 100 | 100 | - | - | 100 | 100 | 100 |
| | | Sulfur atom concentration (ppm) | | - | - | 70 | 0 | 70 | 0 | - | - | 0 | 70 | 0 |
| Molecular chain extender (B) (parts by mass)*1 | (B1) CARBODILITE LA-1 *2 | | | - | 0.2 | - | 0.2 | - | - | - | 0.2 | - | - | - |
| | (B2) JONCRYLADR-4368*3 | | | - | - | 0.2 | - | - | - | - | - | 0.2 | - | - |
| Physical properties of polyether polyamide (A2) | Glass transition temperature (°C) | | | 42.1 | 33.2 | 22.2 | 16.9 | 22.2 | 16.9 | 86.1 | 89.0 | 61.2 | 61.2 | 65.9 |
| | Melting point (°C) | | | 227.5 | 246.2 | 182.8 | 201.9 | 182.8 | 201.9 | 239.8 | 257.0 | 191.5 | 191.5 | 213.8 |
| | Relative viscosity | | | 1.35 | 1.34 | 1.33 | 1.36 | 1.33 | 1.36 | 2.10 | 2.07 | 1.80 | 1.80 | 2.20 |
| | Sulfur atom concentration (ppm) | | | - | - | 34 | 0 | 34 | 0 | - | - | 0 | 35 | 0 |
| | YI value | | | 2 | 2 | -2 | 3 | -3 | 2 | 2 | 3 | 2 | -2 | 2 |
| Shape and physical properties of polyether polyamide fiber | Number of filaments | | | 1 | 34 | 34 | 34 | 34 | 34 | 1 | 34 | 34 | 34 | 34 |
| | Fineness (dtex) | | | 1500 | 200 | 200 | 200 | 200 | 200 | 1500 | 200 | 200 | 200 | 200 |
| | Rate of tensile elongation at break (%)*4 | | | 341 | 411 | 423 | 434 | 402 | 393 | 2.9 | 2.8 | 90 | 45 | 3.4 |
| | Tensile elastic modulus (MPa) *4 | | | 355 | 370 | 300 | 325 | 296 | 319 | 3100 | 3200 | 1750 | 1700 | 2030 |

*1: Blending amount based on 100 parts by mass of the polyether polyamide (A2) (parts by mass)
*2: A trade name for an aliphatic polycarbodiimide compound, manufactured by Nisshinbo Holdings Inc.
*3: A trade name for an epoxy group-containing (meth)acrylic polymer, manufactured by BASF SE
*4: A value evaluated by processing a material constituting the fiber into a film shape

In addition, the above-described moisture absorbing and releasing properties were measured by using the material (polyether polyamide or polyamide) constituting the fiber of each of Examples 2-5 to 2-6 and Comparative Examples 2-4 to 2-5. Results are shown in Tables 3 and 4.

Table 3

| | Coefficient of moisture absorption of the film when allowed to stand under a condition at 23°C and 50% RH (%) | | | | | |
|---|---|---|---|---|---|---|
| | After 0 minute | After 5 minutes | After 10 minutes | After 20 minutes | After 40 minutes | After 60 minutes |
| Example 2-5 | 3.50 | 2.83 | 2.31 | 1.68 | 0.96 | 0.62 |
| Example 2-6 | 3.07 | 1.96 | 1.44 | 1.07 | 0.66 | 0.44 |
| Comparative Example 2-4 | 1.51 | 1.46 | 1.41 | 1.31 | 0.93 | 1.03 |
| Comparative Example 2-5 | 1.60 | 1.38 | 1.22 | 1.22 | 1.02 | 0.92 |

Table 4

| | Normalized coefficient of moisture absorption of the film when allowed to stand under a condition at 23°C and 50% RH (%) | | | | | |
|---|---|---|---|---|---|---|
| | After 0 minute | After 5 minutes | After 10 minutes | After 20 minutes | After 40 minutes | After 60 minutes |
| Example 2-5 | 100 | 81 | 66 | 48 | 27 | 18 |
| Example 2-6 | 100 | 64 | 47 | 35 | 22 | 14 |
| Comparative Example 2-4 | 100 | 97 | 93 | 87 | 61 | 68 |
| Comparative Example 2-5 | 100 | 86 | 76 | 76 | 64 | 58 |

From the results of Table 4, it is noted that the polyether polyamide fiber of the present invention exhibits moisture absorbing and releasing properties of water and has high moisture absorption rate and moisture release rate. Specifically, in the polyether polyamide fibers of Examples 2-5 to 2-6, the normalized coefficient of moisture absorption after holding in an environment at 23°C and 50% RH for 60 minutes is 50% or less, and the moisture release rate is high. In addition, from the results of Table 3, it is noted that in the polyether polyamide fibers of Examples 2-5 to 2-6, when held at 23°C and 80% RH, the coefficient of saturated moisture absorption (namely, a coefficient of moisture absorption at an elapsing time of 0 minute) is 2% or more, and the moisture absorption rate is high, too.

From the results of Tables 2 to 4, it is noted that the polyether polyamide fiber of the present invention is a material having high strength and high elastic modulus and also having excellent moisture absorbing and releasing properties of water and flexibility.

INDUSTRIAL APPLICABILITY

The polyether polyamide fiber of the present invention has high strength and high elastic modulus and also has excellent flexibility. For that reason, the polyether polyamide fiber of the present invention has a good balance between the strength and the flexibility, and it can be used in extremely wide fields including intermediate garments such as an inner garment, an undergarment, a lining, etc., outer garments such as a shirt, a blouse, a sportswear, slacks, etc., bedclothes such as a bed sheet, a quilt cover, etc., and the like.

## Claims

1. A polyether polyamide fiber comprising a polyether polyamide (A1) in which a diamine constituent unit thereof is derived from a polyether diamine compound (a1-1) represented by the following general formula (1) and a xylylenediamine (a-2), and a dicarboxylic acid constituent unit thereof is derived from an α,ω-linear aliphatic dicarboxylic acid having from 4 to 20 carbon atoms:

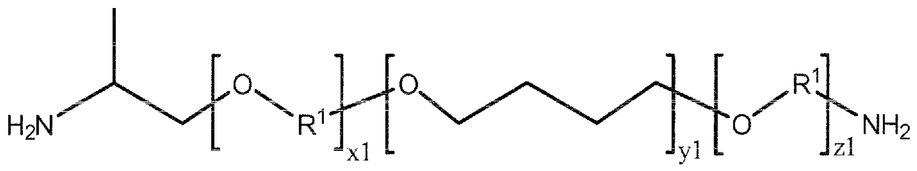
(1)

wherein (x1 + z1) is from 1 to 30; y1 is from 1 to 50; and $R^1$ represents a propylene group.

2. The polyether polyamide fiber according to claim 1, which is a monofilament having a fineness of from 50 to 12,000 dtex.

3. The polyether polyamide fiber according to claim 1, which is a multifilament having a fineness of from 1 to 10,000 dtex.

4. The polyether polyamide fiber according to claim 1, which is a microfiber having a fineness of from 0.001 to 0.8 dtex.

5. The polyether polyamide fiber according to any one of claims 1 to 4, wherein the α,ω-linear aliphatic dicarboxylic acid having from 4 to 20 carbon atoms is at least one member selected from adipic acid and sebacic acid.

6. The polyether polyamide fiber according to any one of claims 1 to 5, wherein the xylylenediamine (a-2) is m-xylylenediamine, p-xylylenediamine, or a mixture thereof.

7. The polyether polyamide fiber according to claim 6, wherein the xylylenediamine (a-2) is m-xylylenediamine.

8. The polyether polyamide fiber according to claim 6, wherein the xylylenediamine (a-2) is a mixture of m-xylylenediamine and p-xylylenediamine.

9. The polyether polyamide fiber according to claim 8, wherein a proportion of the p-xylylenediamine relative to a total amount of m-xylylenediamine and p-xylylenediamine is 90% by mole or less.

10. The polyether polyamide fiber according to any one of claims 1 to 9, wherein a proportion of the constituent unit derived from the xylylenediamine (a-2) in the diamine constituent unit is from 50 to 99.8% by mole.

11. The polyether polyamide fiber according to any one of claims 1 to 10, which is composed of a composition containing the polyether polyamide (A1) and further having a molecular chain extender (B) blended therein.

12. The polyether polyamide fiber according to claim 11, wherein the molecular chain extender (B) is at least one member selected from a carbodiimide compound and a compound containing two or more epoxy groups in a molecule thereof.

13. The polyether polyamide fiber according to any one of claims 1 to 10, which is a composite fiber composed of the polyether polyamide (A1) and a thermoplastic resin (C) other than the polyether polyamide (A1) composited with each other.

14. The polyether polyamide fiber according to any one of claims 1 to 13, which has an irregular cross-sectional shape.

15. A knitted fabric, a woven fabric, a nonwoven fabric, or a staple comprising the polyether polyamide fiber according to any one of claims 1 to 14.

16. A polyether polyamide fiber comprising a polyether polyamide (A2) in which a diamine constituent unit thereof is derived from a polyether diamine compound (a2-1) represented by the following general formula (2) and a xylylenediamine (a-2), and a dicarboxylic acid constituent unit thereof is derived from an α,ω-linear aliphatic dicarboxylic

acid having from 4 to 20 carbon atoms:

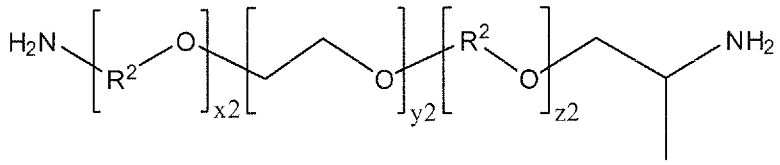

(2)

wherein (x2 + z2) is from 1 to 60; y2 is from 1 to 50; and $R^2$ represents a propylene group.

**17.** The polyether polyamide fiber according to claim 16, which is a monofilament having a fineness of from 50 to 12,000 dtex.

**18.** The polyether polyamide fiber according to claim 16, which is a multifilament having a fineness of from 1 to 10,000 dtex.

**19.** The polyether polyamide fiber according to claim 16, which is a microfiber having a fineness of from 0.001 to 1 dtex.

**20.** The polyether polyamide fiber according to any one of claims 16 to 19, wherein the α,ω-linear aliphatic dicarboxylic acid having from 4 to 20 carbon atoms is at least one member selected from adipic acid and sebacic acid.

**21.** The polyether polyamide fiber according to any one of claims 16 to 20, wherein the xylylenediamine (a-2) is m-xylylenediamine, p-xylylenediamine, or a mixture thereof.

**22.** The polyether polyamide fiber according to claim 21, wherein the xylylenediamine (a-2) is m-xylylenediamine.

**23.** The polyether polyamide fiber according to claim 21, wherein the xylylenediamine (a-2) is a mixture of m-xylylenediamine and p-xylylenediamine.

**24.** The polyether polyamide fiber according to claim 23, wherein a proportion of the p-xylylenediamine relative to a total amount of m-xylylenediamine and p-xylylenediamine is 90% by mole or less.

**25.** The polyether polyamide fiber according to any one of claims 16 to 24, wherein a proportion of the constituent unit derived from the xylylenediamine (a-2) in the diamine constituent unit is from 50 to 99.8% by mole.

**26.** The polyether polyamide fiber according to any one of claims 16 to 25, which is composed of a composition containing the polyether polyamide (A2) and further having a molecular chain extender (B) blended therein.

**27.** The polyether polyamide fiber according to claim 26, wherein the molecular chain extender (B) is at least one member selected from a carbodiimide compound and a compound containing two or more epoxy groups in a molecule thereof.

**28.** The polyether polyamide fiber according to any one of claims 16 to 25, which is a composite fiber composed of the polyether polyamide (A2) and a thermoplastic resin (C) other than the polyether polyamide (A2) composited with each other.

**29.** The polyether polyamide fiber according to any one of claims 16 to 28, which has an irregular cross-sectional shape.

**30.** The polyether polyamide fiber according to any one of claims 16 to 29, which when held at 23°C and 80% RH, has a coefficient of saturated moisture absorption of 2% or more.

**31.** A knitted fabric, a woven fabric, a nonwoven fabric, or a staple comprising the polyether polyamide fiber according to any one of claims 16 to 30.

**INTERNATIONAL SEARCH REPORT**

International application No.
PCT/JP2013/071836

A. CLASSIFICATION OF SUBJECT MATTER
*D01F6/82*(2006.01)i, *C08G69/40*(2006.01)i, *D01F6/60*(2006.01)i, *D03D15/00*(2006.01)i

According to International Patent Classification (IPC) or to both national classification and IPC

B. FIELDS SEARCHED

Minimum documentation searched (classification system followed by classification symbols)
D01F1/00-6/96, 9/00-9/04, C08G69/00-69/50, C08K3/00-13/08, C08L1/00-101/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 60-158221 A (Ube Industries, Ltd.), 19 August 1985 (19.08.1985), entire text (Family: none) | 1-31 |
| A | JP 56-65026 A (Chemische Werke Huels AG.), 02 June 1981 (02.06.1981), entire text & US 4345052 A & US 4429081 A & EP 23956 A1 & DE 2932234 A & SU 1155160 A | 1-31 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 October, 2013 (02.10.13) | 15 October, 2013 (15.10.13) |
| Name and mailing address of the ISA/ Japanese Patent Office | Authorized officer |
| Facsimile No. | Telephone No. |

Form PCT/ISA/210 (second sheet) (July 2009)

INTERNATIONAL SEARCH REPORT

International application No.
PCT/JP2013/071836

C (Continuation). DOCUMENTS CONSIDERED TO BE RELEVANT

| Category* | Citation of document, with indication, where appropriate, of the relevant passages | Relevant to claim No. |
|---|---|---|
| A | WO 2007/145324 A1 (Ube Industries, Ltd.), 21 December 2007 (21.12.2007), entire text & US 2009/0274913 A1 & EP 2036939 A1 & KR 10-2009-0020609 A & CN 101472975 A & TW 200825122 A | 1-31 |
| A | JP 9-241924 A (Mitsubishi Gas Chemical Co., Inc.), 16 September 1997 (16.09.1997), entire text & US 5882793 A & US 5906891 A & EP 786544 B1 & DE 69610894 T2 | 1-31 |
| A | WO 2012/005204 A1 (Mitsubishi Gas Chemical Co., Inc.), 12 January 2012 (12.01.2012), entire text & JP 2012-41526 A & JP 2012-31403 A & US 2013/0078402 A1 & EP 2570459 A1 & AU 2011275035 A & CA 2799554 A & CN 102959014 A & MX 2012014320 A & TW 201217334 A | 1-31 |
| P,A | WO 2013/105607 A1 (Mitsubishi Gas Chemical Co., Inc.), 18 July 2013 (18.07.2013), entire text (Family: none) | 1-31 |
| P,A | WO 2012/111635 A1 (Mitsubishi Gas Chemical Co., Inc.), 23 August 2012 (23.08.2012), entire text & TW 201239006 A | 1-31 |
| P,A | WO 2012/111636 A1 (Mitsubishi Gas Chemical Co., Inc.), 23 August 2012 (23.08.2012), entire text & TW 201239005 A | 1-31 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11315419 A
- JP 9241924 A
- JP 2011026762 A